# EUROPÄISCHE PATENTSCHRIFT

(11) **EP 2 562 039 B1**
(45) Veröffentlichungstag und Bekanntmachung des Hinweises auf die Patenterteilung: **05.06.2019**
(21) Anmeldenummer: 12173589.8
(22) Anmeldetag: 26.06.2012
(51) Int. Cl.: B60Q 1/08, B60Q 1/48

(54) **Verfahren und Vorrichtung zum Ändern einer Lichtaussendung zumindest eines Scheinwerfers eines Fahrzeugs**
Method and advice for adjusting a light output of at least one headlamp of a vehicle
Procédé et dispositif destinés à modifier une émission lumineuse, notamment d'un phare d'un véhicule

(30) Priorität: 23.08.2011 DE 102011081382
(43) Veröffentlichungstag der Anmeldung: 27.02.2013
(73) Patentinhaber: ROBERT BOSCH GMBH, 70442 Stuttgart (DE)
(72) Erfinder: Galbas, Roland, 71640 Ludwigsburg (DE); Wulf, Felix, 71638 Ludwigsburg (DE)

(56) Entgegenhaltungen:
- DE-A1-102004 015 749
- DE-A1-102006 050 546
- DE-A1-102008 058 386
- DE-A1-102009 051 485
- JP-A- 2008 120 162
- JP-A- 2011 084 106
- US-A1- 2008 175 012

## Beschreibung

### Stand der Technik

Die vorliegende Erfindung bezieht sich auf ein Verfahren zum Ändern einer Lichtaussendung zumindest eines Scheinwerfers eines Fahrzeugs , auf eine entsprechende Vorrichtung sowie auf ein entsprechendes Computerprogrammprodukt.

Während Fahrten bei Dunkelheit werden häufig Objekte mit Kollisionsrisiko spät wahrgenommen, und dies trotzdem sie durch Ego- Scheinwerfer oder andere Lichtquellen beleuchtet werden. Schwere Unfälle sind häufig die Folge, insbesondere, wenn Fußgänger oder Fahrradfahrer betroffen sind.

Heutige Fahrwegbeleuchtungssysteme der Fahrzeuge sind gekennzeichnet durch flexible Ausstrahlungsmöglichkeiten, um z.B. Gegenverkehr nicht zu blenden und gleichzeitig die Fahrbahn optimal auszuleuchten. Auch können solche Systeme bereits Objekte direkt beleuchten.

Die DE 10 2009 054 101 A1 offenbart ein eine Beleuchtungsvorrichtung für ein Fahrzeug, umfassend zumindest einen Schweinwerfer, welcher eine Strahlungsquelle zur Erzeugung infraroter Strahlung und eine Lichtquelle zur Erzeugung sichtbaren Lichts aufweist. Diese Strahlungsquelle ist aus mehreren Infrarot-Leuchtdioden-Modulen gebildet, welche jeweils zumindest eine Infrarot-Leuchtdiode umfassen. Die Lichtquelle ist zumindest aus einem Leuchtdioden-Modul gebildet, welches zumindest eine Leuchtdiode umfasst, wobei die Strahlungsquelle in die Lichtquelle integriert ist.

Die Druckschrift DE 10 2009 051481 A1 zeigt ein Verfahren und Vorrichtung zur Steuerung eines Fahrlichts eines Fahrzeugs.

Die Druckschrift JP 2008 120162 A zeigt ein Beleuchtungssystem für Fahrzeuge.

Die Druckschrift DE 10 2008 058386 A1 zeigt ein Verfahren und Anordnung zur Ansteuerung eines Fahrzeugscheinwerfers.

Die Druckschrift DE 10 2006 050546 A1 zeigt ein Verfahren zur Informationsdarstellung.

Die Druckschrift US 2008/175012 A1 zeigt ein warnendes Beleuchtungssytem.

Die Druckschrift JP 2011 084106 A zeigt ein Richtungscharakterisitk-Beleuchtungssteuergerät.

Die Druckschrift DE 10 2004 015749 A1 offenbart eine Vorrichtung zur Bestimmung einer Durchfahrtsmöglichkeit für ein Fahrzeug.

### Offenbarung der Erfindung

Vor diesem Hintergrund wird mit der vorliegenden Erfindung ein Verfahren zum Ändern einer Lichtaussendung zumindest eines Scheinwerfers eines Fahrzeugs, weiterhin eine Vorrichtung zum Warnen eines Fahrers eines Fahrzeugs vor einem sich im Umfeld des Fahrzeugs befindenden Objekt sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Die vorliegende Erfindung schafft ein Verfahren zum Ändern einer Lichtaussendung zumindest eines Scheinwerfers eines Fahrzeugs , wobei das Verfahren die folgenden Schritte aufweist:
- Einlesen eines Positionssignals, das eine Position des Objektes vor oder neben dem Fahrzeug repräsentiert; und
- Verändern der Lichtaussendung von dem zumindest einen Scheinwerfer des Fahrzeugs auf das Objekt unter Verwendung des Positionssignals, wobei beim Verändern ein sich veränderndes Beleuchtungsmuster auf das Objekt oder in ein Umfeld des Objektes ausgestrahlt wird, um die Lichtaussendung des zumindest einen Scheinwerfers einen Fahrzeugs zu ändern.

Die vorliegende Erfindung schafft ferner eine Vorrichtung, die ausgebildet ist, um die Schritte des erfindungsgemäßen Verfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Somit schafft die vorliegende Erfindung eine Vorrichtung zum Ändern einer Lichtaussendung zumindest eines Scheinwerfers eines Fahrzeugs, wobei die Vorrichtung die folgenden Merkmale aufweist:
- eine Schnittstelle zum Einlesen eines Positionssignals, das eine Position des Objektes vor oder neben dem Fahrzeug repräsentiert; und
- eine Einrichtung zum Verändern der Lichtaussendung von dem zumindest einen Scheinwerfer des Fahrzeugs auf das Objekt unter Verwendung des Positionssignals, wobei beim Verändern ein sich veränderndes Beleuchtungsmuster auf das Objekt oder in ein Umfeld des Objektes ausgestrahlt wird, um die Lichtaussendung des zumindest einen Scheinwerfers des Fahrzeugs zu ändern.

Unter einer Vorrichtung kann vorliegend ein elektrisches Gerät verstanden werden, das Sensorsignale verarbeitet und in Abhängigkeit davon Steuersignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Unter einem Umfeld des Fahrzeugs kann ein Bereich des Fahrzeugs auf einer Fahrbahn vor oder querab neben dem Fahrzeug verstanden werden. Unter einem Objekt kann ein mobiles Objekt wie beispielsweise ein anderes Fahrzeug (Fremdfahrzeug) oder ein Fußgänger verstanden werden, das/der sich im Zeitablauf selbsttätig bewegt. Ferner kann auch ein immobiles Objekt wie beispielsweise eine Verkehrsinfrastruktureinrichtung (wie ein Verkehrszeichen oder ein Leitpfosten) oder ein Baum am Fahrbahnrand als Objekt im Sinne der vorstehenden Definition verstanden werden. Als ein Positionssignal kann eine Information oder ein Signal verstanden werden, das eine Position über das Objekt repräsentiert. Beispielsweise kann diese Information, die im Positionssignals enthalten ist eine Entfernung, Richtung, Größe oder weitere Information repräsentieren, die eine geographische Position (vorzugsweise in Bezug zum Fahrzeug) des Objekts und einen Typ des Objekts bezeichnet. Erfindungsgemäß repräsentiert das Positionssignal eine Höhe eines nicht-mobilen Objektes über einer Fahrbahn. Unter einer Lichtaussendung kann eine Abstrahlcharakteristik eines Scheinwerfers verstanden werden. Dabei kann beispielsweise eine erste Weise einer Lichtaussendung Licht im Fernlichtmodus ausgesandt werden wogegen in einer zweiten Weise einer Lichtaussendung Licht im Abblendlichtmodus ausgesandt wird. Jedoch ist die Lichtaussendung nicht auf die beiden genannten Modi eingeschränkt, sondern es ist vielmehr eine unbeschränkte Art und Weise der Aussendung von Licht unter einer "Lichtaussendung" zu verstehen. Beispielsweise können auch Kurvenlicht, Autobahnlicht oder weitere Lichtaussendungsmodi in Betracht kommen, die unter die Bezeichnung einer "Lichtaussendung" gemäß der vorstehend genannten Definition fallen. Hierbei kann es sich um individuell einstellbare Modi handeln, die Licht auf die vor dem Fahrzeug oder neben dem Fahrzeug liegende Fahrbahn oder in die Umgebung des Fahrzeugs auszusenden, um eine möglichst optimale Ausleuchtungssituation für einen Fahrer des Fahrzeugs zu erreichen. Die Lichtaussendung erfolgt ferner unter Verwendung des Positionssignals, was bedeutet, dass die Bestimmung des Modus oder der Bereich, der durch den zumindest einen Scheinwerfer des Fahrzeugs ausgeleuchtet werden soll, derart bestimmt wird, dass das Positionssignal zur Berechnung oder Bestimmung der genauen Ausgestaltung oder Festlegung des auszuleuchtenden Bereichs vor oder neben dem Fahrzeug mit berücksichtigt wird. Unter einem Umfeld um das Objekt kann ein Bereich verstanden werden, der sich in unmittelbarer Nähe des Objektes, beispielsweise einen Meter vom Objekt entfernt, befindet. Hierdurch kann sichergestellt werden, dass nicht nur das Objekt angeleuchtet wird, sondern dass sich das Objekt selbst im vom Beleuchtungsmuster ausgeleuchteten Bereich befindet, so dass sich die Konturen des Objektes besser vom Hintergrund unterscheiden lassen, als wenn nur das Objekt selbst und nicht die Umgebung um das Objekt angeleuchtet wird. Unter einem sich verändernden Beleuchtungsmuster kann ein Beleuchtungsmuster verstanden werden, das während seiner Ausstrahlung verändert wird. Beispielsweise können durch Veränderung der Reflexionseigenschaften oder einer Veränderung der Richtung der Lichtaussendung durch die Scheinwerfer sich scheinbar bewegende hellere und dunklere Bereiche erzeugt werden, die auf das erkannte Objekt gerichtet, d.h. ausgestrahlt werden. Hierdurch erscheinen für einen Betrachter desjenigen Bereichs, auf den das Beleuchtungsmuster auftrifft, sich bewegende Lichtstrukturen, die eine besondere Aufmerksamkeit des Betrachters, speziell des Fahrers des Fahrzeugs, auf sich ziehen. Hierdurch kann der Fahrer des Fahrzeugs gewarnt werden.

Die vorliegende Erfindung basiert auf der Erkenntnis, dass durch das Anstrahlen des Objektes mit einem sich verändernden Beleuchtungsmuster eine technisch sehr einfachauszuführende Warnung des Fahrers eines Fahrzeugs durchgeführt werden kann. Insbesondere durch die in Zukunft vermehrt eingesetzten Scheinwerfer, die eine sehr flexible und schnelle Lichtausstrahlung ermöglichen, kann durch eine Ausstrahlung eines sich bewegenden Beleuchtungsmusters eine deutliche Erhöhung der Verkehrssicherheit durch die frühzeitige Warnung eines Fahrers erreicht werden. Zugleich kann auch ein weiterer Verkehrsteilnehmer vor dem herannahenden Fahrzeug gewarnt werden, wobei dieser Verkehrsteilnehmer in diesem Fall als Objekt erkannt und mit einem sich verändernden Beleuchtungsmuster angestrahlt wird. Auch können auch Fahrer von weiteren Fremdfahrzeugen mit nicht derart flexibel einstellbaren Scheinwerfern von der Ausstrahlung des sich verändernden Beleuchtungsmusters durch die Scheinwerfer des Fahrzeugs auf das Objekt profitieren, da die Fahrer dieser Fremdfahrzeuge ebenfalls das sich verändernde Beleuchtungsmuster wahrnehmen können, obwohl es nicht von den Scheinwerfern dieser Fremdfahrzeuge abgestrahlt wurde. Auf diese Weise wird durch Ausstrahlung des sich verändernden Beleuchtungsmusters mittels der flexible einstellbaren Scheinwerfer des Fahrzeugs nicht nur der Nutzen für den Fahrer des Fahrzeugs mit der entsprechenden Ausrüstung zur Beleuchtung mit dem veränderbaren Beleuchtungsmuster verbessert, sondern es wird die gesamte Verkehrssicherheit bei Anwesenheit eines derart modernen Fahrzeugs verbessert.

Besonders vorteilhaft ist es, wenn im Schritt des Veränderns ein Beleuchtungsmuster auf das Objekt oder in das Umfeld des Objektes ausgestrahlt wird, das einen Teilbereich mit einer hohen und einen anderen Teilbereich mit einer niedrigen Helligkeit aufweist, wobei sich der Teilbereich mit der hohen Helligkeit in Richtung des Objektes zu bewegt. Eine derartige Ausführungsform der vorliegenden Erfindung bietet den Vorteil einer guten Erkennbarkeit des sich verändernden Beleuchtungsmusters, da die "Bewegung" des helleren Teilbereichs einen hohen Aufmerksamkeitserreichungseffekt aufweist. Unter einem helleren Teilbereich kann dabei ein Bereich des Beleuchtungsmusters verstanden werden, der beispielsweise eine um zumindest 10 % höhere Helligkeit, besser noch eine um 25 % größere Helligkeit als derjenige Teilbereich aufweist, der als Teilbereich mit der niedrigen Helligkeit betrachtet wird.

Um eine besonders hohe Aufmerksamkeit durch den Betrachter, insbesondere den Fahrer des Fahrzeugs zu erreichen, kann im Schritt des Veränderns das Beleuchtungsmuster derart ausgestrahlt werden, dass es zumindest einen Bereich aufweist, der kreisförmig oder umlaufend um das Objekt ausgebildet ist. Unter einem umlaufenden Bereich ist ein Bereich zu verstehen, der ähnlich einer Kreisform weder Anfang noch Ende aufweist. Eine derartige Ausführungsform der vorliegenden Erfindung bietet den Vorteil einer besonders guten Möglichkeit der Warnung eines Betrachters, da durch die um das Objekt herum erscheinende hohe Helligkeit wird das Auge des Betrachters üblicherweise auf den Mittelpunkt oder Innenraum dieser kreisförmigen oder umlaufenden Form gelenkt, in der sich dann das Objekt befindet. Auf diese Weise wird durch Ausnutzung der natürlichen Blickrichtung bei der Betrachtung einer Umgebung die Aufmerksamkeit des Betrachters automatisch auf das Objekt gelenkt, vor dem der Betrachter gewarnt werden soll.

Gemäß einer weiteren Ausführungsform der vorliegenden Erfindung kann im Schritt des Veränderns das Beleuchtungsmuster derart ausgestrahlt werden, dass es einen geraden streifenförmigen Bereich aufweist, insbesondere der sich beim dem Verändern der Lichtaussendung über das Objekt bewegend ausgestrahlt wird. Unter einem streifenförmigen Bereich kann ein Bereich des Beleuchtungsmusters verstanden werden, der näherungsweise einen Abschnitt einer Gerade bildet. Eine derartige Ausführungsform der vorliegenden Erfindung bietet den Vorteil, dass durch die Verwendung eines solchen streifenförmigen Bereichs des Beleuchtungsmusters, der meist durch seine Form eine hohe Beachtung beim Betrachter findet, sehr schnell auf das Objekt hingewiesen werden kann, vor dem der Betrachter, insbesondere der Fahrer des Fahrzeugs gewarnt werden soll.

Um bereits durch das ausgesandte Beleuchtungsmuster dem Betrachter, speziell dem Fahrer des Fahrzeugs, beispielswiese bereits eine Mitteilung über die Größe einer Gefährdung durch das Objekt oder für das Objekt zu übermitteln, kann im Schritt des Einlesens das Positionssignals ferner eine Information über einen Typ und/oder eine Klasse des Objektes umfassen, wobei im Schritt des Veränderns ansprechend auf die Information über den Typ und/oder die Klasse des Objektes ferner eines von zumindest zwei sich unterscheidenden Beleuchtungsmustern ausgewählt wird, das auf das Objekt oder in das Umfeld des Objektes ausgestrahlt wird. Hierbei können zwei sich unterscheidende Beleuchtungsmuster verwendet werden, sie sich beispielsweise in zumindest 30 Prozent, günstigerweise in zumindest 50 Prozent der Fläche des Beleuchtungsmusters anders ausgestaltet sind. Beispielsweise können sich die Beleuchtungsmuster durch sich unterschiedliche Farbtöne oder eine unterschiedliche Struktur in diesen Beleuchtungsmustern unterscheiden. Auf diese Weise kann einerseits sichergestellt werden, dass der Betrachter, beispielsweise der Fahrer des Fahrzeugs, sehr schnell an Hand der einfachen Unterscheidung des erkannten Beleuchtungsmusters auf die Gefährdung durch das Objekt oder für das Objekt schließen kann, ohne dass er das Objekt selbst zu erkennen braucht.

Günstig ist es ferner, wenn im Schritt des Einlesens das Positionssignal eingelesen wird, das zusätzlich eine Position eines mobilen Objekts repräsentiert. Eine derartige Ausführungsform der vorliegenden Erfindung bietet den Vorteil, auf mobile Objekte besonders hinzuweisen, die meist eine höhere Gefährdung auf das eigene Fahrzeug (beispielsweise wenn es sich bei dem Objekt um ein Fremdfahrzeug handelt) oder eine höhere Gefährdung für das Objekt (beispielsweise wenn es sich um einen Fußgänger handelt).

Insbesondere bei einer schnellen Fahrt beispielsweise auf der Autobahn ist es von Vorteil, wenn ein Objekt, das eine Gefahr für die Fahrtsicherheit des Fahrzeugs darstellt frühzeitig erkannt wird und der Fahrer somit frühzeitig auf diese Objekt hingewiesen werden kann. In einer derartigen Situation ist es vorteilhaft, wenn im Schritt des Einlesens ferner ein Fahrtsignal über einen Fahrzeugparameter oder eine physikalische Größe eingelesen wird, die eine Bewegung des Fahrzeugs repräsentiert, wobei im Schritt des Veränderns die Lichtaussendung ferner unter Verwendung des Fahrtsignals. Eine solche physikalische Größe, die eine Bewegung des Fahrzeugs repräsentiert, kann beispielsweise eine Gierrate, eine Beschleunigung, oder eine ähnliche Größe sein, die beispielsweise von einem Sensor im Fahrzeug erfasst wird. Unter einem Fahrtparameter kann beispielsweise eine Einstellung des Fahrzeugs oder die Stellung eines Bedienelementes des Fahrzeugs verstanden werden, wie beispielsweise ein Einschlagwinkel des Lenkrades oder eine Stellung oder eine Winkelstellung eines Pedals.

Gemäß einer besonderen Ausführungsform der vorliegenden Erfindung kann im Schritt des Veränderns eine Geschwindigkeit einer Veränderung des auf oder neben das Objekt ausgestrahlten Beleuchtungsmusters in Abhängigkeit von einem eingelesenen Typ oder einer Klasse des Objektes und/oder einer Position des Objektes vor oder neben dem Fahrzeug erfolgen. Eine derartige Ausführungsform der vorliegenden Erfindung bietet den Vorteil einer Anpassbarkeit des Warnverhaltens, ohne eine Gefahr des Erschreckens durch das plötzlich ausgestrahlte Beleuchtungsmuster für den Fahrer hervorzurufen.

Erfindungsgemäß werden im Schritt des Einlesens ferner Fahrspurdaten eingelesen, die eine Information über eine Beziehung der Position des Objektes zur Fahrspur repräsentieren, auf der sich das Fahrzeug befindet, wobei im Schritt des Veränderns die Lichtausstrahlung unter Verwendung der eingelesenen Fahrspurdaten erfolgt. Unter Fahrspurdaten kann dabei beispielsweise eine Information verstanden werden, die einen Hinweis darauf gibt, ob das Objekt sich auf einer Fahrspur befindet, auf der eigentlich Gegenverkehr verkehren sollte oder ob sich das Objekt auf dem Standstreifen oder am Fahrbahnrand befindet. Diese Information aus den Fahrspurdaten kann dann vorteilhaft für die Abschätzung der Gefährdung durch das Objekt oder des Objektes verwendet werden. Beispielsweise wird von einem Objekt, das auf einer Fahrspur befindet, auf der Gegenverkehr zu erwarten ist, eine größere Gefahr für das eigene Fahrzeug zu erwarten sein, da es sich in diesem Fall vermutlich um ein entgegenkommendes Fahrzeug handelt. Andererseits wird von einem Objekt auf dem Standstreifen oder am Fahrbahnrand eine geringere Gefahr für das eigene Fahrzeug ausgehen, da in diesem Fall die Wahrscheinlichkeit größer ist, dass es sich bei dem Objekt um einen Fußgänger handelt, der selbst durch das eigene Fahrzeug mehr gefährdet ist, als umgekehrt. Wenn das Objekt jedoch weiter weg ist, als der eine Ausbreitung des Standstreifen zu vermuten ist, könnte es sich um einen Baum handeln, von dem wiederum eine größere Gefahr für das eigene Fahrzeug zu erwarten ist, wenn beispielsweise der Fahrer die Kontrolle über das Fahrzeug verliert und an den Baum prallt. Insofern bietet eine derartige Ausführungsform der vorliegenden Erfindung den Vorteil in Abhängigkeit von einer tatsächlichen Gefährdungslage ein passendes Beleuchtungsmuster zur Ausgabe bereitzustellen.

Günstig ist es ferner, wenn im Schritt des Einlesens eine Information über eine vorhandene Parklücke an einem Rand einer vom Fahrzeug befahrenen Fahrbahn eingelesen wird, wobei im Schritt des Veränderns ferner die Lichtaussendung derart verändert wird, dass zumindest ein Teil des Beleuchtungsmusters die Parklücke beleuchtet oder in die Parklücke gerichtet wird. Eine derartige Ausführungsform der vorliegenden Erfindung bietet den Vorteil, dass insbesondere bei Dunkelheit, wenn die Parkplatzsuche im Allgemeinen deutlich erschwert ist, eine technische Unterstützung bei dem Auffinden einer geeigneten Parklücke zu bieten. Hierdurch wird dem Fahrer des Fahrzeugs durch die im Fahrzeug bereits meist schon implementierte flexible Beleuchtungseinheit ein zusätzlicher Fahrkomfort geboten.

Ferner kann auch in einer anderen Ausführungsform der vorliegenden Erfindung im Schritt des Einlesens ein Helligkeitssignals eingelesen werden, das eine Helligkeit in der Umgebung des Fahrzeugs repräsentiert, wobei im Schritt des Veränderns die Lichtaussendung ansprechend auf das Helligkeitssignal verändert wird, insbesondere wobei im Schritt des Veränderns die Lichtaussendung verändert wird, wenn das Helligkeitssignal eine Helligkeit signalisiert, die eine vordefinierte Schwelle unterschreitet. Eine derartige Ausführungsform bietet den Vorteil, dass einerseits die Aussendung des Beleuchtungsmusters von einer Umgebungshelligkeit abhängig gemacht werden kann, so dass beispielsweise bei Dämmerung, einer Vollmondnacht oder im Bereich von beleuchteten Straßen keine Teilbereich mit derart hohen Helligkeiten verwendet werden brauchen wie bei Neumondnächten oder bei einer Durchfahrt eines Waldstückes und andererseits erst ab einem vordefinierten Helligkeitspegel die Aussendung des Beleuchtungsmusters überhaupt erst eingeschaltet wird, da diese Art der Warnung bei Tageslicht nicht wie gewünscht funktioniert.

Günstig ist es ferner, wenn gemäß einer besonders vorteilhaften Ausführungsform der vorliegenden Erfindung im Schritt des Einlesens eine Information eingelesen wird, dass das Fahrzeug aktuell aus einer Parklücke ausfährt, wobei im Schritt des Veränderns das Beleuchtungsmuster derart ausgestrahlt wird, dass zumindest ein Teilbereich des Beleuchtungsmusters auf ein querab zum Scheinwerfer befindliches Objekt, insbesondere ein anderes Fahrzeug, ausgestrahlt wird. In einer derartigen Ausführungsform der vorliegenden Erfindung kann durch die Aussendung des Beleuchtungsmusters ein Querverkehr vorteilhaft gewarnt werden, dass das eigene Fahrzeug aus der Parklücke ausfährt, wobei meist der Fahrer des aus der Parklücke ausfahrenden Fahrzeugs keinen optimalen Überblick über den Querverkehr hat. In dieser Ausführungsform der vorliegenden Erfindung kann somit die gesamte Verkehrssituation in Bezug auf eine möglicherweise drohende Kollision von Fahrzeugen des Querverkehrs mit dem die Parklücke verlassenden Fahrzeug vermieden werden, wenn die Fahrzeuge des Querverkehrs durch die Aussendung des Beleuchtungsmusters frühzeitig gewarnt werden

Die Erfindung wird nachstehend anhand der beigefügten Zeichnungen beispielhaft näher erläutert. Es zeigen:
- Fig. 1: ein Blockschaltbild eines Fahrzeugs, in dem ein Ausführungsbeispiel der vorliegenden Erfindung verwendet wird;
- Fig. 2A-C: schematische Darstellungen von Beispielen von Beleuchtungsdiagrammen, die in einem Ausführungsbeispiel der vorliegenden Erfindung verwendbar sind;
- Fig. 3: ein partielles Ablaufdiagramm eines Ausführungsbeispiels der vorliegenden Erfindung;
- Fig. 4: eine schematische Darstellung eines Fahrzeugs, das auf ein Hindernis zufährt, das in einer bestimmten Höhe über der Fahrbahn angeordnet ist;
- Fig. 5: ein Diagramm, das ein Kollisionsrisiko in Abhängigkeit von einer Position des Objektes von einer Fahrspurmitte repräsentiert, wobei das eigene Fahrzeug in der Fahrspurmitte fährt.
- Fig. 6: eine schematische Darstellung eines Szenarios, bei dem der hier vorgestellte Ansatz zur Findung einer Parklücke eingesetzt werden kann;
- Fig. 7: eine schematische Darstellung eines Szenarios, bei dem der hier vorgestellte Ansatz zur Beleuchtung von Bäumen an einem Fahrbahnrand als Kollisionsgefährdungsobjekte erkannt wurden;
- Fig. 8: eine schematische Darstellung eines Szenarios, bei dem der hier vorgestellte Ansatz zur Beleuchtung von Fußgängern an einem Fahrbahnrand als Kollisionsgefährdungsobjekte erkannt wurden; und
- Fig. 9: eine schematische Darstellung eines Szenarios, bei dem der hier vorgestellte Ansatz zur Beleuchtung von querenden Fahrzeugen bei Ausfahrt aus einer Parklücke als Kollisionsgefährdungsobjekte erkannt wurden

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

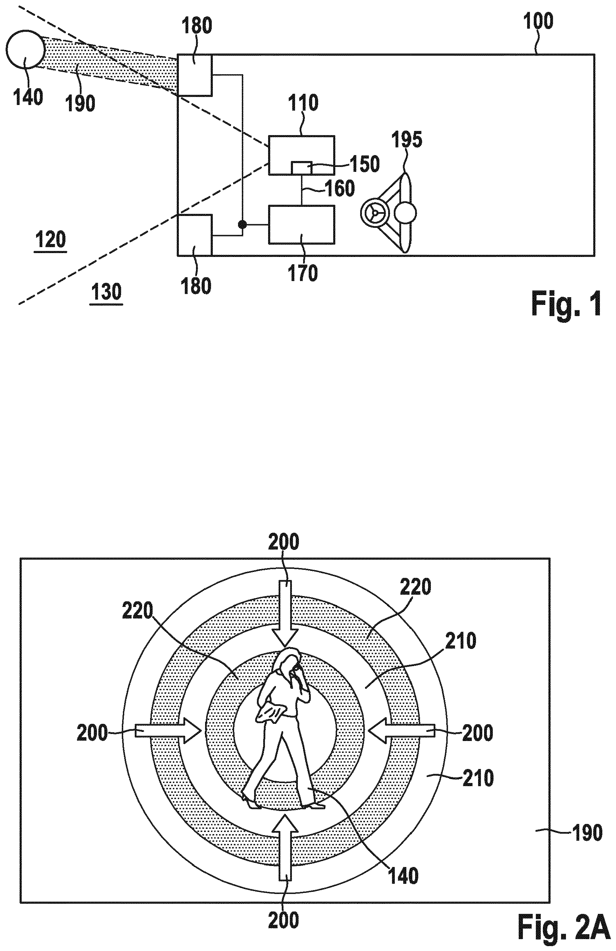

Fig. 1 zeigt ein Blockschaltbild eines Fahrzeugs, in dem ein erstes Ausführungsbeispiel der vorliegenden Erfindung eingesetzt wird. Dabei ist in der Fig. 1 ein Fahrzeug 100 dargestellt, das eine Kamera 110 aufweist. Diese Kamera 110 erfasst in einem Blickbereich 120 eine Umgebung 130 des Fahrzeugs 100. Bei der Erfassung der Umgebung 130 des Fahrzeugs 100 wird dabei durch die Kamera 110 ein Objekt 140 erkannt, das am Straßenrand positioniert ist und beispielsweise einen Fußgänger oder einen Baum darstellt. Dieses Objekt 140 wird in der Kamera 110 klassiert, beispielsweise in die Klasse "Verkehrsteilnehmer", hier beispielsweise in die Klasse "Fußgänger", oder in die Klasse "immobiles Objekt", hier beispielsweise in die Klasse "Baum am Fahrbahnrand". Ferner wird in der Kamera 110, die beispielsweise eine kleine Rechnereinheit 150 enthält, eine Positionsinformation oder ein Positionssignal 160 bestimmt, welches eine Information über die Position des Objektes 140 und/oder den Typ des Objektes 140 oder eine Information über eine Position des Objektes 140 in Bezug auf eine Fahrspur, auf die das Fahrzeug 100 fährt oder eine ähnliche Information wie beispielsweise eine Risikoabschätzung, wie wahrscheinlich eine Kollision mit dem Objekt 140 zu befürchten ist, repräsentiert. Dieses Positionssignal 160 wird an eine Einheit 170 zum Verändern der Lichtaussendung durch Scheinwerfer 180 des Fahrzeugs 100 übertragen. Diese Übertragung kann beispielsweise durch Nutzung von bereits im Fahrzeug vorhandenen Datenübertragungsstrukturen erfolgen, wie beispielsweise die Nutzung des CAN-Busses. Die Einheit 170 kann beispielsweise auch in einer zentralen Lichtsteuerungsanlage oder einem anderen zentralen Signalverarbeitungsbaustein untergebracht sein. Die Einheit 170 zum Verändern der Lichtaussendung oder Lichtausstrahlung ermittelt dann unter Verwendung des Positionssignals 160 ein sich veränderndes Beleuchtungsmuster 190, das von zumindest einem Scheinwerfer 180 des Fahrzeugs 100 auf das Objekt 140 oder in ein Umfeld des Objektes 140 abgestrahlt wird, wobei beim Ausstrahlen des Beleuchtungsmusters 190 ein Abstrahlwinkel von unterschiedlichen Teilbereichen des Musters in Bezug zum Objekt 140 unterschiedlich verändert werden. Dadurch, dass nun die Teilbereiche durch Abstrahlwinkel abgestrahlt werden, die sich in Bezug auf das Objekt unterschiedlich verändern, entstehen Bereiche des Beleuchtungsmusters, die sich beim Auftreffen auf das Objekt oder in die Umgebung des Objektes zu bewegen scheinen. Auf diese Weise ist es möglich, einen Fahrer 190 des Fahrzeugs 100 durch das ausgegebene Beleuchtungsmuster 190 vor dem Objekt 140 zu warnen, indem die Aufmerksamkeit des Fahrers 195 durch das sich verändernde Beleuchtungsmuster 190 auf das Objekt gerichtet wird.

Eine einfache Beleuchtung von Objekten mit Kollisionsrisiko differenziert für den Fahrer nur schwach gegenüber gegen über anderen Objekten, die ebenso beleuchtet werden, wenn auch nur mit geringerer Intensität. Ein wichtiger Aspekt der vorliegenden Erfindung ist es, das oder die Objekt(e) 140 insbesondere mit hohem Kollisionsrisiko durch wechselnde Lichtintensität/Lichtintensitätsfolgen auf dem Objekt 140 und im Umfeld des Objektes 140 für den Fahrer 195 stark gegenüber anderen Objekten so zu differenzieren bzw. abzuheben, um so sein Aufmerksamkeit des Fahrers 195 zu den "Kollisionsrisikoobjekten" hinzuführen. Vorteilhaft ist die dabei entstehende Möglichkeit über Musterschemata/ Musterfolgen und über Intensitätsunterschiede die Kollisionskritikalität für den Fahrer 195 zu differenzieren. Beispielsweise kann ein Objekt 140, das als ein Fußgänger erkannt wird, mit einem möglichen Beleuchtungsmuster 190 (insbesondere mit einer Beleuchtungsmusterfolge) gemäß der Darstellung aus Fig. 2A beleuchtet werden. Dabei wird das Objekt 140 ein Beleuchtungsmuster 190 angestrahlt, welches kreisförmige, zum (beispielsweise Kollisionsrisiko-) Objekt 140 in Richtung der Pfeile 200 hinlaufende Lichtwellen aufweist. Dabei bilden sich die Lichtwellen durch aufeinanderfolgende Teilbereiche 210 des Beleuchtungsmusters 190 mit höherer Helligkeit, die sich mit Teilbereichen 220 des Beleuchtungsmusters 190 mit niedrigerer Helligkeit abwechseln. Durch diese scheinbar laufenden Lichtwellen der Teilbereiche 210 mit der höheren Helligkeit wird somit die Aufmerksamkeit des Fahrers 195 auf das Objekt 140 gelenkt, für das möglicherweise ein erhöhtes Kollisionsrisiko besteht. Durch diese Bewegung, die als ein "Pumpen" der Beleuchtung des Objektes 140 verstanden werden kann, ist folglich eine sehr gute Warnung auf das Objekt 140 sichergestellt.

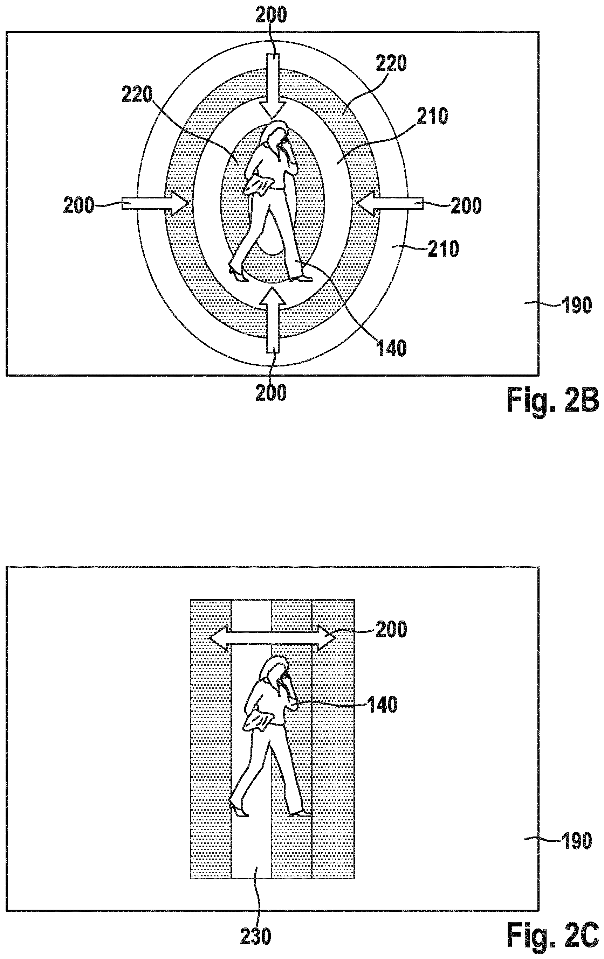

Ebenso ist es auch denkbar, dass ein solches "Pumpen" der Beleuchtung des Objekts 140 durch die Verwendung einer Ellipsoide zum Kollisionsrisikoobjekt 140 laufende hinlaufende Lichtwellen erfolgt, wie es in der Fig. 2B dargestellt ist. Dabei werden im Unterschied zur Darstellung aus Fig. 2A statt kreisförmigen Teilbereichen 210 mit höherer und niedrigerer Helligkeit eine Abfolge von ellipsenförmigen Teilbereichen 210 mit höherer Helligkeit und ellipsenförmigen Teilbereichen 220 mit niedrigerer Helligkeit verwendet. Ebenso ist es denkbar, dass geradenförmige Abschnitte wie beispielsweise Wechselstreifen 230 unterschiedlicher Helligkeiten verwendet werden, die als Beleuchtungsmuster 190 über das Objekt 140 hinweg bewegt werden. Diese in den Figuren 2A, 2B und 2C gezeigten Beleuchtungsmuster können auch für jeweils unterschiedliche Objekte 140 oder Typen von Objekten 140 verwendet werden, vor denen der Fahrer gewarnt werden soll. Beispielsweise kann ein erster Typ von Objekten 140 mit einem Beleuchtungsmuster 190 aus kreisförmigen Teilbereichen angestrahlt werden, wogegen ein zweiter Typ von Objekten mit einem Beleuchtungsmuster 190 aus ellipsenförmigen Teilbereichen oder streifenförmigen Beleuchtungsmustern angestrahlt werden. Somit kann eine

Es ist ferner vorteilhaft, wenn der Fahrer 195 des Fahrzeugs 100 die obengenannten Musterschemata oder Musterfolgen und Intensitätsunterschiede für unterschiedliche Gefährdungen erlernt und somit schnelle Reaktionszeiten gegenüber Gefährdungen aufbaut. Es ist durch die Verwendung des hier vorgestellten Ansatzes möglich, eine Differenzierung von Objekten durch unterschiedliche Lichtmusterfolgen vorzunehmen. Somit ist eine Differenzierung von beleuchteten Objekten auf Basis von Scheinwerferlichtmustern / Scheinwerferlichtmusterfolgen in Kombination von Lichtintensitätsunterschieden sehr hilfreich, um einen Fahrer des Fahrzeugs vor einem Objekt zu warnen, das möglicherweise ein Kollisionsrisiko für eine Kollision mit dem Fahrzeug darstellt.

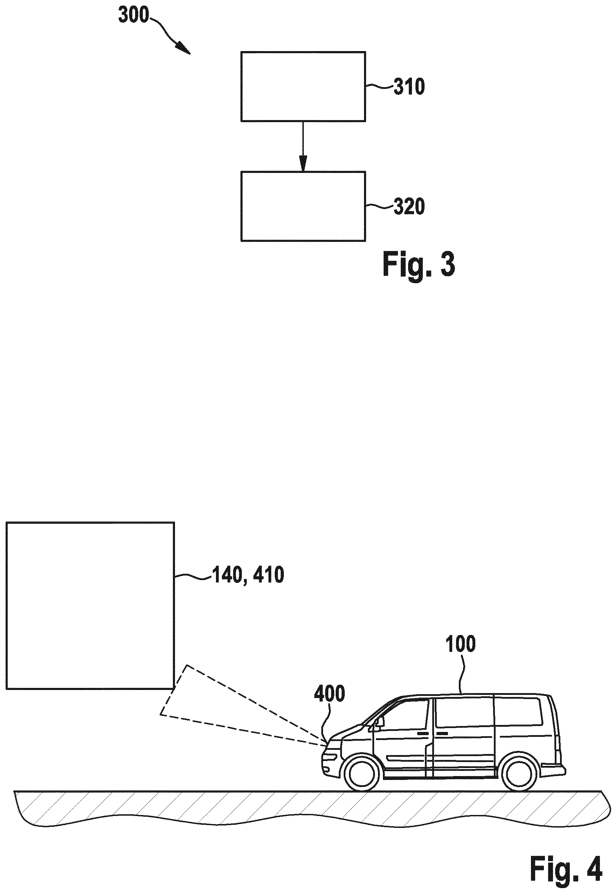

Die vorliegende Erfindung schafft ferner ein Verfahren 300 zum Ändern einer Lichtaussendung zumindest eines Scheinwerfers eines Fahrzeugs wie es als gemäß dem als Ablaufdiagramm aus Fig.3 teilweise wiedergegeben ist. Das Verfahren 300 umfasst einen Schritt des Einlesens 310 eines Positionssignals, das eine Position des Objektes vor oder neben dem Fahrzeug repräsentiert. Ferner umfasst das Verfahren einen Schritt des Veränderns 320 der Lichtaussendung von dem zumindest einem Scheinwerfer des Fahrzeugs auf das Objekt oder in ein Umfeld des Objekts unter Verwendung des Positionssignals, wobei beim Verändern ein sich veränderndes Beleuchtungsmuster auf das Objekt oder in ein Umfeld des Objektes ausgestrahlt wird, um die Lichtaussendung des zumindest einen Scheinwerfers des Fahrzeugs zu ändern.

Weiterhin wird die Erfindung als Verfahren zur Information, insbesondere Warnung des Fahrers durch Fahrtlichtausleuchtung der Gefahrenstelle bei drohendem Unfall durch Einfahrt in eine Fahrtstrecke eingesetzt, wobei das Fahrzeug für diese Einfahrt aufgrund seiner Abmessungen vertikal oder horizontal zu klein ist. Bei Einfahrt in eine höhenbegrenzte Fahrtstrecke z.B. ein Parkhaus kommt es häufig zu Situationen, dass Fahrzeuge mit zu großer Höhe Unfälle erleiden. Der Umstand der Höhenbegrenzung für das aktuell gefahrene Fahrzeug wird oft z.B. bei Fahrzeugwechsel zu einem Lieferwagen nicht wahrgenommen.

Auch kommt es vor, dass laterale Begrenzungen nicht wahrgenommen werden und hierdurch Schäden entstehen (z.B. im Parkhaus). Um derartige Schäden zu vermeiden, werden vermehrt Umfeldsensorik-Systeme wie Videosensoriksysteme oder Radarsensoriksysteme oder weitere wie TOF (TOF = time of flight - wie PMD Systeme) werden in Fahrzeugen eingesetzt.

Gleichzeitig besitzen fast alle Fahrzeuge Inertialsensotriksysteme welche Bestrandteil von ESP (ESP = elektronisches Stabilitätsprogramm) sind. Auf Basis derer können Wahrscheinlichkeiten für einen zukünftigen Fahrkorridor abgeleitet werden. Zudem erlauben Inertialsensotriksysteme Lageaussagen zum Fahrzeug selbst (Nickwinkel, Rollwinkel).

Vermehrt werden Fahrzeugstraßenbeleuchtungssysteme (beispielsweise Scheinwerfer) mit der Fähigkeit einer variablen Lichtpositionierung und variablen Intensitätseinstellung (beispielsweise variabler Lichtstrahlrichtung) angeboten.

Der hier vorgestellte Ansatz bietet non die Möglichkeit einer Warnung des Fahrers durch Fahrtlichtausleuchtung der Gefahrenstelle bei drohendem Unfall durch Einfahrt in eine Fahrtstrecke, für welche das Fahrzeug aufgrund seiner Abmessungen vertikal oder horizontal zu klein ist. Gemäß einer besondere Ausführungsform der vorliegenden Erfindung kann bei einer Erkennung einer solchen Gefahr bzw. einem solchen gefährdeten oder gefährlichen Objekt, welches mit einem veränderbaren Beleuchtungsmuster angestrahlt werden soll, eine aktive Intervention (z.B. ein automatisches Bremsen) durchgeführt werden.

Ferner besteht in einer weiteren Variante dieses Ausführungsbeispiels die Möglichkeit der Ausgabe einer Warnung bzw. aktive Intervention (z.B. Bremsen, Gegenlenken) bei drohendem Unfall durch Weiterfahrt einer Fahrtstrecke bei Erkennung einer lateralen Kollisionsgefahr.

Bei diesem Ausführungsbeispiel kann entsprechend der folgenden Vorgehensweise vorgegangen werden.

### Schritt 1: Vermessung

Bei Einfahrt in eine höhenbegrenzte / lateral begrenzte Fahrtstrecke vermisst das umfeldsensorische System die Positionen und Oberflächen von Umfeldobjekten relativ zu Fahrzeugpositionen. Dies ist exemplarisch in der schematischen Darstellung aus Fig. 4 wiedergegeben, in der ein Sensorsystem 400 in dem Fahrzeug 100 die Höhe eines Hindernisses 410 über der Fahrbahn misst, wobei dieses Hindernis 410 beispielsweise durch die Kamera 110 aus Fig. 1 als Objekt 140 erkannt wird. Es erfolgt nun eine Berechnung der Umfeldobjekt-Eigenschaften und/oder Fahrzeugeigenschaften. Dies kann entsprechend den nachfolgend näher beschriebenen Detailschritten erfolgen. Zunächst vermisst oder schätzt das umfeldsensorische System 400 die Lage, Positionen und Oberflächenzuordnung des Umfeldobjekts 410 relativ zu Fahrzeugposition. Zur Unterstützung der Vermessung können beispielsweise bildverarbeitende Videosysteme auf Basis von Flächenschätzungen Fahrzeugwinkelpositionen wie Rollwinkel und Nickwinkel des Fahrzeuges schätzen. Weiterhin können anschließend beispielsweise Radarsysteme eine direkte Objektentfernung vermessen Zur weiteren Unterstützung können fahrzeuginterne Inertialsensoriksysteme Winkelpositionen und insbesondere den Winkel zum Gravitationsvektor (Nickwikel) aber auch Rollwinkel schätzen. Nachdem die Berechnugn der Eigenschaften des Umfeldobjekts und die Fahrzeugeigenschaften gemessen oder geschätzt wurden erfolgt eine Datenaufbereitung der gemessenen oder geschätzten Werte.

Diese Datenaufbereitung kann beispielsweise auf der Basis einer Datenfusion von Daten der Umfeldsensoriksysteme (z.B. Videosensoriksysteme, Radarsensoriksysteme) mit den Daten von Inertialsensoriksystemen die Sicherheit der Vermessung erhöht werden. Als Resultat wird die relative Entfernung von Umfeldobjekten oder Flächen zum Fahrzeug erhalten, wobei ein Vergleich mit bekannten Fahrzeugdimensionen einen Hinweis auf eine mögliche Gefährdung des Objektes durch das Fahrzeug oder umgekehrt liefert.

### 2. Schritt: Gefahrenschätzung

Basierend auf der Erkennung der Fahrtrichtung und Geschwindigkeit (beispielsweise aus Daten der Inertialsensorik des ESP-Systems) und gegebenenfalls in einer Datenfusion mit Umfeldsensoriksystemen kann in Verbindung mit der Vermessung / Schätzung der Umfeldobjekt-Eigenschaften eine Unfallwahrscheinlichkeit geschätzt werden (z.B. bei Einfahrt in ein für das Fahrzeug zu niedriges Parkhaus oder bei Einfahrt in eine zu enge Parklücke). Als Resultat wird erhalten, dass eine erhöhte Unfallwahrscheinlichkeit bei Weiterfahrt besteht und an welcher Position sich die Gefahrenstelle bzw. das Objekt genau befindet.

### 3. Schritt: Warnung / Aktiver Eingriff

Durch die Kenntnis der Gefahrenstelle (d.h. der Position des Objektes) relativ zum Fahrzeug kann nun auf Basis des Fahrzeugstraßenbeleuchtungssystems (insbesondere des zumindest einen Scheinwerfers) mit der Fähigkeit einer variablen Lichtpositionierung bzw. variablen Lichtintensitätseinstellung (variabler Lichtstrahlrichtung die Gefahrenstelle direkt angeleuchtet und damit hervorgehoben werden. Weiterhin kann durch entsprechende Lichtpulsmuster auf oder zur Gefahrenstelle die Aufmerksamkeit des Fahrers weiterhin erhöht werden.

Weiterhin kann auch ein aktiver Eingriff in das Steuerungssystem des Fahrzeugs eingeleitet werden, so dass ein drohender Unfall automatisch durch ein Fahrerassistenzsystem des Fahrzeugs verhindert wird.

Vorteilhaft bei einem derartigen Ausführungsbeispiel ist, dass beispielsweise durch eine parallele Nutzung haptischer (z.B. Lenkradvibration, Bremsruck usw.) und/oder akustischer Warnung (z.B. einem Buzzer) die Warnung verstärkt werden kann, die durch eine Anstrahlung des Objektes mit einem Beleuchtungsmuster erreicht werden kann.

Zusammenfassend kann für diese Ausführungsbeispiel somit angeführt werden, dass eine Methode zur Vermessung einer Kollisionsgefahr bei Weiterfahrt aufgrund Fahrzeugabmessungen und lateraler Kollisionsgefahr (SDF aus Umfeld- und Inertialsensorik) vorgestellt wird. Die Nutzung einer variablen Lichtpositionierung bzw. variablen Lichtintensitätseinstellung (d.h. eine variable Lichtstrahlrichtung) zur direkten Hervorhebung einer Gefahrenursache kann im Sinne einer Warnung eingesetzt werden. Ferner bewirkt die Nutzung von einem Lichtpulsmuster auf oder zur Gefahrenstelle eine Erhöhung der Aufmerksamkeit des Fahrers zur Gefahrenursache. Alternativ oder zusätzlich kann ein aktiver Eingriff in ein Fahrzeugsteuerungssystem (z.B. ein Bremsen, Lenken) bei Erkennung einer oben beschriebenen Kollisionsgefahr erfolgen, um das Kollisionsrisiko zu vermindern.

Zusätzlich kann ein Verfahren zur Verminderung von Unfallschäden durch Fahrspurverlassen verwendet werden. Die Motivation für ein derartiges Verfahren ist darin zu sehen, dass Unachtsamkeit bzw. späte Erkennung des Verlassens einer Fahrspur zu Unfällen führen kann. Kollisionen mit stehenden Objekten (wie beispielsweise Bäume, Leitplanken, Gebäude, etc.) bzw. sich bewegenden Objekten (wie beispielsweise andere Verkehrsteilnehmer) können beim Verlassen der eigenen Fahrspur auftreten. Ein wichtiger Aspekt besteht daher darin, einer Erkennung von möglichen Gefahrensituationen und ein Warnen sowohl des Fahrers des eigenen Fahrzeugs als auch anderer Verkehrsteilnehmer vor dieser Gefahrensituation vorzunehmen.

Aktuelle Systeme sind in der Lage die Steuerung der Fahrzeuglichts auf Basis von Daten der Videosensorik zu adaptieren. Beispielsweise ist in US 2007 0176080 A1 ein System dargestellt, welches mit Hilfe eines Bildsensors und einer logischen Schalteinrichtung den Strahl des Abblend-/Fernlichts adaptieren und an die gegebene Verkehrssituation anpassen kann. Andere Systeme warnen andere Verkehrsteilnehmer durch Lichtsignale. Beispielsweise ist in ZA 9408565 A ein System für eine Warneinrichtung beschrieben, die ausgehend von entgegenkommendem Licht Warnsignale aussendet. Dieses System ist für eine feststehende Warneinrichtung gedacht, wie z.B. ein Warndreieck. Zudem ist die Erkennung des entgegenkommenden Verkehrs durch lediglich einen Helligkeitssensor sehr fehleranfällig. Systeme die auf Basis eines zuvor prädizierten Kollisionsrisikos einen Scheinwerfer ansteuern, um den Fahrer und andere Verkehrsteilnehmer zu warnen sind jedoch nicht bekannt.

Eine Zielstellung eines derartigen Verfahrens ist darin zu sehen, dass eine Erkennung von durch Fahrspurverlassen hervorgerufenen Gefahren erfolgt und eine Warnung des Fahrers des eigenen Fahrzeugs und anderer Verkehrsteilnehmer durch Adaption des Scheinwerfers oder der Lichtausstrahlung durch den Scheinwerfer des eigenen Fahrzeugs erfolgt.

Um dieses Ziel zu erreichen, kann in mehreren Schritten vorgegangen werden.

### Schritt 1: Erkennung des Umfelds (Fahrspurszenarien)

Es erfolgt eine Prognose einer Ego-Fahrspur (d.h. der Fahrspur des eigenen Fahrzeugs) sowie eine Einschätzung einer Eingrenzung /Limitierung der prognostizierten Ego-Fahrspur anhand von folgenden Datenquellen und geeigneter Sensor-Datenfusion.

Generell ist eine Erkennung von zusätzlichen Fahrspurinformationen über eine Umfeldsensorik zur Erkennung von Objektinformationen vorzunehmen, wobei
A) stehende Objekte oder Markierungen und deren Reflexionen (wie z.B. Alleenbäume, Leitplanken, Bebauung Gebäude, Baustellenabgrenzungen, etc.) beispielsweise durch eine klassische Spurmarkierungserkennung über Linienerkennung unter Verwendung von z.B. Videosensorik, Radarsensorik, Ultraschall oder ähnliches erkannt werden und/oder
B) bewegte Objekte, Markierungen und oder deren Reflexionen wie z.B. andere Verkehrsteilnehmer, unter Verwendung beispielswiese einer Erkennung der Scheinwerfer des Gegenverkehrs durch z.B. Videodaten oder durch eine Auswertung von Verkehrsflussdaten anderer Verkehrsteilnehmer beispielsweise über C2X-Kommunikation erkannt werden.

Generell ist auch eine Erkennung von zusätzlichen Fahrspurinformationen über Umfeldsensorik oder telemetrischer Datenübermittlung vorteilhaft, wobei beispielsweise ein Map-Matching mit digitaler Karte und GPS Information erfolgen kann aus der unter anderem eine Straßenklasseninformation gewonnen werden kann. Zusätzlich und/oder alternativ kann eine Information über die Wahrscheinlichkeit zu Anzahl der Spuren je Richtung bestimmt oder eingelesen werden. Ferner ist es denkbar, dass eine Fahrspurinformation über C2X -Kommunikation z.B. freie Tunnelspuren und Richtung vom Tunnel über C2X- Kommunikation an eine entsprechend eingerichtete Einheit im Fahrzeug übermittelt werden. Weiterhin können erkannte Verkehrszeichen (z.B. ein Autobahnschild, das auf mehrere Fahrsuren in eine Richtung hinweist, ...) beispielsweise mittels Video eingelesen werden.

Die eingelesenen oder anders bestimmten Daten werden dann beispielswiese einer Vorverarbeitung unterzogen, in der beispielsweise eine Daten-und/oder Informationsfusion und Plausibilisierung der genannten Datenbasen erfolgt. Auch kann eine Klassifikation und Plausibilisierung von Objektdaten sowie eine Erhöhung der Wahrscheinlichkeit von Spurdaten z.B. durch Referenzierung stehender Objekte (wie beispielsweise einer Brücke) mit GPS / Map-Matching erfolgen.

Als Ergebnis der vorherigen Datenverarbeitung kann eine Information über Vorhandensein, Position und Fahrtrichtung aller für das eigene Fahrzeug relevanten Fahrspuren, Position(en) von Objekten und anderen Verkehrsteilnehmern (Stehende, bewegte Objekte) erhalten werden. Weiterhin können Daten zum Fahrumfeld (wie beispielsweise einer Autobahn, Landstraße, städtisches Umfeld, etc.) und eine Wahrscheinlichkeit der Korrektheit obiger Daten erhalten werden.

Als zentrale Referenzgröße für die weitere Ansteuerung der Lichtausstrahlung können eine Position und/oder ein Richtungssinn der Fahrspur, auf der das eigene Fahrzeug fährt und/oder eine Position und/oder ein Richtungssinn angrenzender Fahrspuren und deren räumlicher und zeitlich zukünftiger Verlauf im Sinne der Bewegung des eigenen Fahrzeugs verstanden werden.

### Schritt 2: Prädiktion der Wahrscheinlichkeit des Spurverlassens (Fahrmanöverszenarien)

1) Prädiktion der zukünftigen Trajektorie anhand von das eigene Fahrzeug betreffende Fahrzeugdaten. Als Signalbasis für eine Berechnung der zukünftigen Trajektorie können u.a. eine ESP-Modellrechnung, eine ESP Sensorik (z.B. ein erfasster Lenkradwinkel, Raddrehzahlen, Inertialsensorik,...) verwendet werden. Auch können ein Blinkersignal und/oder Routendaten (z.B. aus einer Navigationseinheit), ein GPS-Map-Matching z.B. durch Zieleingabe in eine Navigationseinheit oder Daten aus einer Fahrerbeobachtung (z.B. durch Auswertung der Blickwendung) als Signalbasis verwendet werden.

Als Ergebnis kann eine Wahrscheinlichkeitsbelegung eines räumlichen und zeitlichen Ego-Fahrkorridors (d.h. eines Fahrkorridors des eigenen Fahrzeugs erhalten werde, der beispielsweise eine Verteilung von Wahrscheinlichkeiten auf möglichen Ego-Fahrtrajektorien repräsentiert.

### Schritt 3: Plausibilisierung (d.h. ein Vergleich der ermittelten Fahrspurszenarien gegenüber den zu erwartenden Fahrmanöverszenarien)

In diesem dritten Schritt erfolgt eine Erhöhung der Erkennungswahrscheinlichkeit des Spurverlassens mittels einer Plausibilisierung
A) der Fahrspurszenarien aus Schritt 1 und der Fahrmanöverszenarien aus Schritt 2 plausibilisiert. Beispielsweise wird einer Wahrscheinlichkeit für eine erkannte Fahrspur auf 80% geschätzt, bzw. mit einem Wert von 80 % plausibilisiert, eine Wahrscheinlichkeit für eine Erkennung des Spurverlassens auf 60 % erkannt oder mit einem solchen Wert plausibilisiert und/oder eine Wahrscheinlichkeit für die Einschätzung der Nebenfahrspur als ist Gegenfahrspur auf 20% erkannt oder mit diesem Wert plausibilisiert.
B) Verifikation der aus dem oben genannten Punkt A) resultierenden maßgeblichsten Wahrscheinlichkeiten über zu erwartende Änderungen der Fahrmanöverdaten und Fahrszenariendaten.

Beispielsweise kann eine Plausibilisierung über eine Erkennung des Gegenverkehrs durch z.B. Radardaten (z.B. einer Erkennung, dass sich der Gegenverkehr in die Trajektorie des eigenen Fahrzeugs hinein bewegt) erfolgen. Alternativ oder zusätzlich kann eine Plausibilisierung des Gegenverkehrs mittels einer Erkennung von Umfeldobjektänderungen über eine Auswertung von Videodaten erfolgen, beispielsweise wenn erkannt wird, dass sich Leitplanken /Bäume bewegen. in die Trajektorie des eigenen Fahrzeugs bewegen. Dabei stellt die Vorgehensweise aus Punkt B) eine Rekursion dar; die in der Vorgehensweise nach Punkt A) erzeugten Szenarien mit den höchsten Wahrscheinlichkeiten werden verifiziert, indem die Änderungen der Fahrspurszenarien und die Änderungen der Fahrmanöverszenarien mit den Resultat aus der Vorgehenswese aus Punkt A) verglichen werden.

Als Ergebnis wird die Wahrscheinlichkeit für Verlassen der Ego-Fahrspur, d.h. der Fahrspur des eigenen Fahrzeugs erhalten.

### Schritt 4: Erkennung des Kollisionsrisikos mit anderen Objekten

Die Erkennung des Kollisionsrisikos erfolgt unter Verwendung der Daten aus den Schritten 1 bis 3 zur Erkennung und Berechnung eines Kollisionsrisikos mit
a) immobilen Objekten (z.B. Leitplanken, Bäume, Gebäude, Randbebauung, etc.) und/oder
b) mobilen Objekten (z.B. Fußgänger, Fahrradfahrer, Autos, LKW, etc.)

Als Basis für die Erkennung des Risikos einer Kollision können beispielsweise die folgenden Aspekte und/oder Werte berücksichtigt werden:
- die Wahrscheinlichkeit für das Vorhandensein von anderen (relevanten) Objekten;
- die Wahrscheinlichkeit für das Verlassen der Ego- Fahrspur; und/oder
- die Wahrscheinlichkeit für das Vorhandensein / die Fahrtrichtung der Nachbarfahrspur

Als Ergebnis wird das Kollisionsrisiko mit
- immobilen Objekten (z.B. Leitplanken, Bäume, Gebäude, Randbebauung, etc.) und/oder
- mobilen Objekten (z.B. Fußgänger, Fahrradfahrer, Autos, LKW, etc.) erhalten.

### Schritt 5: Ansteuerung zumindest eines Scheinwerfers zur Veränderung der Lichtabstrahlcharakterisik ansprechend auf das erkannte Kollisionsrisiko

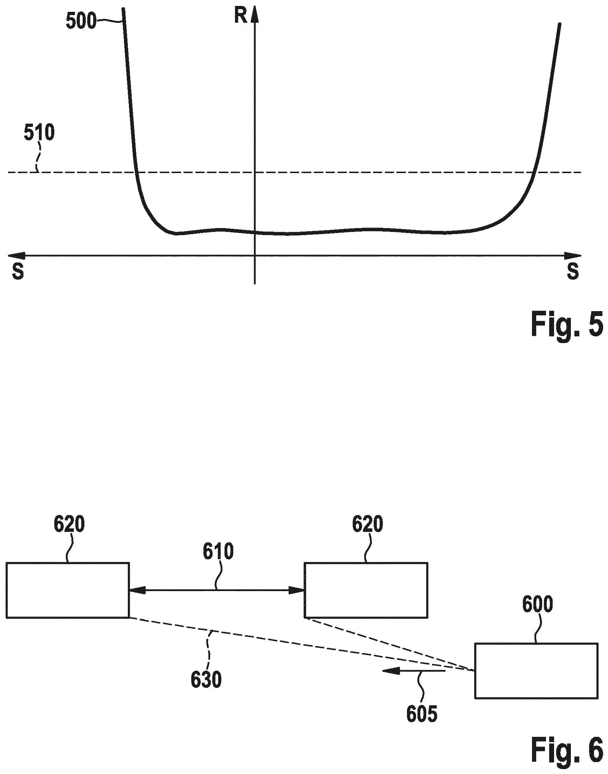

Generell ist anzumerken, dass das Ansteuern (insbesondere das Aufblenden) der Scheinwerfer des eigenen Fahrzeugs gemäß den erkannten Risiken, bei Überschreitung eines vordefinierten Schwellwertes für das Kollisionsrisiko erfolgen sollte. Dieser könnte z.B. von der Fahrgeschwindigkeit oder dem Fahrumfeld (Autobahn, Landstraße, Stadt, das bereits in Schritt 1 erkannt wurde) abhängig sein. Eine solche Ansteuerung der Scheinwerfer zur Veränderung Lichtausstrahlung kann beispielsweise aus dem Diagramm aus Fig. 5 entnommen werden, in den auf der Abszisse der Abstand s zur Fahrspurmitte aufgetragen ist, auf der das eigene Fahrzeug fährt und auf der Ordinate das Kollisionsrisiko R aufgetragen ist. Es ist ersichtlich, dass die das Kollisionsrisiko darstellende Kurve 500 in Bereichen mit einem großen seitlichen Abstand (sowohl auf der linken als auch auf der rechten Seite) zur Fahrspurmitte der Fahrspur einen steilen Anstieg des Kollisionsrisikos bezeichnet, der einen Kollisionsrisikoschwellwert 510 überschreitet, so dass an diesen Bereichen mit einem hohen Abstand zur Fahrspurmitte der Fahrspur, auf der das eigene Fahrzeug fährt ein Aufblenden oder eine Veränderung der Ausstrahlungscharakterisik des oder der Scheinwerfer erfolgen sollte.

Ziel des Aufblendens gemäß diesem Verfahren ist dann insbesondere die Ausgabe einer Warnung bzw. einer Aufmerksamkeitsfokussierung des Fahrers des eigenen Fahrzeugs bzw. anderer Verkehrsteilnehmer. Bei immobilen Objekten kann ein solches Aufblenden oder eine Veränderung der Lichtausstrahlung derart ausgeführt werden, dass ein direktes Anleuchten des Objekts erfolgt, um ein Lenken der Aufmerksamkeit des Fahrers des eigenen Fahrzeugs auf das kollisionsgefährdete Objekt zu erreichen. Bei mobilen Objekten kann das Aufblenden des Fernlichtscheinwerfers oder die Veränderung der Abstrahlcharakterisik erfolgen, um hierdurch ein Warnen der anderen Verkehrsteilnehmer vor der erkannten Gefahr zu ermöglichen oder umzusetzen. Das Aufblenden oder die Veränderung der Lichtausstrahlung könnte in einer weiteren Ausprägung der Erfindung auf eine bestimmte Zeitdauer beschränkt sein und/oder in einer bestimmten Frequenz moduliert sein. In einer weiteren Ausprägung der Erfindung ist eine Überlagerung unterschiedlicher (insbesondere von zwei unterschiedlichen) Reaktionsmuster bei Vorhandensein des Kollisionsrisikos mit sowohl mobilen, als auch immobilen Objekten denkbar.

Der vorstehende Ansatz kann auch zur Implementierung eines zusätzlichen Verfahrens zur Unterstützung des Fahrers bei der Suche von Parklücken verwendet werden. Als Motivation für eine solche Verwendung kann angeführt werden, dass Fahrer potentielle Parklücken meist erst sehr spät wahrnehmen können. Insbesondere die Klassifizierung, ob eine Parklücke von der Parklückenlänge her ausreichend dimensioniert ist, kann vom Fahrer nur sehr schwer durchgeführt werden, bevor das Fahrzeug die Parklücke passiert hat. Der Fahrer ist durch das "Suchen" einer Parklücke abgelenkt. Das Potential für einen Verkehrsunfall ist in dieser Situation erhöht. Dieser Effekt verstärkt sich zudem noch bei Dunkelheit, da hier Parklücken noch schwerer frühzeitig durch den Fahrer erkannt werden können. Ein weiteres Problem bei den bekannten Einparksystemen ist, dass der Fahrer nach Vorbeifahrt an der Parklücke und der Erkennung durch das System das Fahrzeug zunächst anhalten muss. Der Abstand zwischen dem zum Stillstand gekommenen Fahrzeug und der Parklücke darf dabei nicht zu groß sein, so dass der automatische Einparkvorgang noch durchgeführt werden kann.

Heutige Parksysteme vermessen Parklücken während der Vorbeifahrt mit Hilfe von an der Fahrzeugseite angebrachten Ultraschallsensoren. Die Erkennung, ob eine Parklücke vorhanden ist, kann also erst getroffen werden, wenn das Fahrzeug die Parklücke bereits passiert hat. Ein solches System ist z.B. in DE 10 2005 032 096 A1 oder DE 38 13 083 A1 beschrieben. Bei den beschriebenen Systemen ist der Fahrer während der Parkplatzsuche zusätzlich zur eigentlichen Fahraufgabe mit verschiedenen Aufgaben zur Überwachung der Parkplatzsuche in den Vorgang eingebunden. Insbesondere muss nach der Vorbeifahrt an einer geeigneten Parklücke eine Bremsung bis in den Stillstand durchgeführt werden. Im Sinne eines zügigen Einparkvorganges ist es sinnvoll und erforderlich, dass der Abstand zwischen der Parklücke und dem zum Stillstand gekommenen Fahrzeug nicht zu groß ist. Ein wichtiger Aspekt dieses Verfahrens ist es daher, den Fahrer bei der Suche nach einem Parkplatz, insbesondere bei Dunkelheit zu unterstützen, ihn frühzeitig auf mögliche Parklücken hinzuweisen, so dass er entsprechend reagieren kann und sich zudem weiter auf die eigentliche Fahraufgabe konzentrieren kann.

Dieses Verfahren ermöglicht somit eine frühzeitige Erkennung von potentiellen Parklücken. Es erfolgt ein Markieren der potentiellen Parklücke mit Hilfe von Lichtstrahlen aus dem Fahrscheinwerfer. Dabei kann diese Vorgehensweise zur Information des Fahrers über eine ausreichend große Parklücke in mehrere Schritte unterteilt werden.

### Schritt 1: Erkennung des Parkwunsches

In diesem Schritt erfolgt eine Identifikation des Fahrerwunsches zum Abstellen des Fahrzeuges. Dabei kann aus Basis für eine derartige Identifikation beispielsweise ein Signal sein, das durch eine Betätigung eines Parkknopfes des Fahrers generiert wird. Auch kann der Parkwunsch aus Navigationsdaten (beispielsweise durch ein kurz bevorstehendes oder bereits erfolgtes Erreichen des Zielpunktes) oder aus Daten aus Innenraumkamera (wie beispielsweise einer erkannten Blickrichtung des Fahrers, die als ein "Suchen" von Parklücken in der Umgebung klassifiziert werden kann). Auch kann ein Signal beispielsweise einer Videosensorik (beispielsweise durch eine Geschwindigkeitsbegrenzung mit Hilfe von Verkehrszeichenerkennung, eine Erkennung des befahrbaren Gebietes vor dem Fahrzeug, etc.) oder ein Signal aus einer Radarsensorik (beispielsweise das Vorhandensein von vorweg fahrenden Fahrzeugen) auf einen Parkwunsch des Fahrers des eigenen Fahrzeugs hindeuten. Ferner ist es denkbar, dass auch Daten des eigenen Fahrzeugs wie beispielsweise die Fahrgeschwindigkeit auf einen Parkwunsch des Fahrers hindeuten. Ferner kann auch eine Kombination der vorhandenen Daten und eventuell eine Plausibilisierung der vorstehend genannten Signale au den Parkwunsch hinweisen, wie dass beispielsweise die gefahrene Geschwindigkeit Tempolimit unterschreitet, obwohl kein Hindernis voraus erkennbar ist. Als Ergebnis der Erkennung des Parkwunsches kann somit eine Wahrscheinlichkeit für eine Zustand "Fahrer möchte Parken" erhalten werden.

### Schritt 2: Frühzeitige Erkennung von potentiellen Parklücken

Durch eine Nutzung der Umfeldsensorik, können potentielle Parklücken frühzeitig erkannt werden. Dabei braucht keine 100%-ige Sicherheit erreicht werden, dass die erkannte Parklücke wirklich eine Parklücke ist. Es sollte vielmehr nur ein anzeigendes System vorgehalten werden, durch welches auf eine Parklücke hingewiesen und beim Vorbeifahren noch mal durch Ultraschallsensorik vermessen und verifiziert wird. Als Basis für die frühzeitige Erkennung einer potentiellen Parklücke können beispielsweise Signale verwendet werden, die auf Radardaten (z.B. Reflexe am Fahrbahnrand in regelmäßigen Abständen deuten auf parkende Fahrzeuge hin) und/oder Daten aus einer Videosensorik (z.B. eine Klassifizierung der Umfelddaten in geparkte Fahrzeuge, fahrende Fahrzeuge, Randbebauung, etc.) erhalten werden. Alternativ oder zusätzlich können auch Daten aus einem Map-Matching der GPS-Daten (z.B. eine Klassifikation der befahrenen Straße aus einer digitalen Karte deutet auf das Vorhandensein von Parklücken am Straßenrand hin, z.B. keine Parklücken auf Autobahnen, Landstraßen, Schnellstraßen, etc.) als Basis für die frühzeitige Erkennung von potentiellen Parklücken verwendet werden.

Sind diese Daten aufgenommen, kann eine Vorverarbeitung der Daten ausgeführt werden, wobei beispielsweise eine Fusion der Umfelddaten erfolgt. Hierbei kann beispielsweise eine Erkennung von potentiellen Parklücken auf Basis der Daten zum Fahrbahnrand erfolgen, wobei insbesondere auch "Löcher" zwischen geparkten Fahrzeugen mit einer ausreichend großen Lückenlänge auf eine potentielle Parklücke hinweisen. Als Ziel dieses Schrittes kann eine Erkennung der Position von potentiellen Parklücken und ihrer Wahrscheinlichkeit aus ausreichend große Parklücke erhalten werden.

### Schritt 3: Verarbeitung der Daten und Ansteuerung des Scheinwerfers bzw. der Scheinwerfer

Die Verarbeitung der Daten und zur Ansteuerung des/der Scheinwerfer kann auf folgenden Bedingungen basieren.- Zunächst kann ein Wunsch des Fahrer erkannt werden, dass er parken möchte (Zustand "Fahrer möchte Parken"). Dann kann eine "potentielle Parklücke erkannt" werden und weiterhin erkannt werden, dass eine "Umgebungshelligkeit niedrig genug" ist, dass eine Ausstrahlung eines Beleuchtungsmusters auch eine ausreichend Aufmerksamkeit des Fahrers auf die potentielle Parklücke lenkt. Sind beispielsweise alle Bedingungen mit einer hinreichenden Genauigkeit erfüllt, werden der oder die Scheinwerfer angesteuert. Diese Grenzwerte der Erfüllung der genannten Bedingungen könnten in einer weiteren Ausprägung der Erfindung von anderen Daten des eigenen Fahrzeugs abhängig sein (z.B. es wird eine höhere Fehlertoleranz bei höherer Fahrgeschwindigkeit akzeptiert). Die Scheinwerfer des Fahrzeugs werden derartig angesteuert, dass Sie die Position der potentiellen Parklücke mit Lichtstrahlen markieren. Beispielsweise kann dies entsprechend der Darstellung aus Fig. 6 erfolgen, wobei das eigene Fahrzeug 600, das in die Fahrtrichtung 605 fährt, eine Länge einer Parklücke 610 zwischen zwei am Fahrbahnrand parkenden Fahrzeugen 620 erfasst und den Lichtkegel 630 zumindest eines Scheinwerfers oder ein besonderes (insbesondere en sich veränderndes) Beleuchtungsmuster in diese Parklücke richtet. Der Fahrer des Fahrzeugs 600 braucht sich also nicht selbsttätig an der Parklückensuche beteiligen und kann sich auf die eigentliche Fahraufgabe konzentrieren. In einer weiteren Ausprägung der Erfindung könnte die Markierung der Parklücken auf eine bestimmte Zeitdauer beschränkt oder mit einer bestimmten Frequenz moduliert sein.

Der vorstehende Ansatz kann auch zur Implementierung eines zusätzlichen Verfahrens zur optimierten Warnung des Fahrers bei Fahrspurverlassen verwendet werden. Häufig führt ein ungewolltes Fahrspurverlassen zu gefährlichen Situationen oder Unfällen. Die Information oder Warnung des Fahrers zum Risiko dieser Fahrsituation wird bei heutigen Lane-Departure-Warning-Systemen nur ungenügend und nicht zeitgerecht übermittelt. Heutige LDW-Systeme informieren bzw. warnen den Fahrer bei der erkannten Gefahr des Verlassens einer Fahrspur typischerweise durch im Fahrzeug verbaute optische, haptische oder akustische Aktoren (HMI). Die typische Aufmerksamkeitsrichtung des Fahrers liegt jedoch in der Fahrumgebung und nicht im Fahrzeugcockpit. Bei typischen Szenarien des ungewollten Fahrspurverlassens liegt die visuelle Aufmerksamkeit des Fahrers nicht an den Fahrspurmarkierungen oder Randobjekten (Bäume, Randbebauung, etc.) sondern in anderen Umfeldobjekten z.B. passierenden Fahrzeugen. Zudem kann der Fahrer die Gefahr durch heutige HMI's nicht direkt zuordnen, da eine spezifische Zuordnung zur Gefahr selber und zur Richtung oft nicht gegeben ist. Bis der Fahrer eine Orientierung und Zuordnung der Gefahr kognitiv erfasst und verarbeitet hat, hat sich das Risiko oft schon deutlich erhöht, bzw. ein Unfall ist schon erfolgt.

Ein besonderer Aspekt dieses Verfahrens ist darin zu sehen, dass durch den hier beschriebenen Ansatz ein Richten der visuellen Aufmerksamkeit des Fahrers auf Fahrspur und Randobjekte vorteilhaft möglich ist, die bei ungewolltem Verlassen der Fahrspur zu Risiken / gefährlichen Situationen führen können. Gleichzeitig soll die Erkennbarkeit der Randobjekte (Distanzen, Klassifikation der Objekte, Einschätzung der Risiken, etc.) und damit der möglichen Risiken während der Dunkelheit deutlich verbessert werden. Die Anwendung des Verfahrens kann vorrangig bei dunkler Umgebung eingesetzt werden.

Die Implementierung dieses Verfahrens kann in mehreren Schritten ausgeführt werden.

Schritt 1: Basierend auf State-of-the-Art-Technologien zur Erkennung des Fahrspurverlassens (z.B. Video-front- oder Video-rear-Radar, gegebenenfalls einer Fusion der Umfelddaten aus verschiedenen Sensorsystemen oder auch Nutzung von GPS-Navigation (Map-Matching)) wird das Verlassen einer Fahrspur detektiert. Dabei kann die Intention des Fahrers anhand des Fahrverhaltens und der Umfeldsituation bewertet und klassifiziert werden. Es ist ein ungewolltes Fahrspurverlassen erkennbar.

Die Erkennung eines drohenden Verlassens der Fahrspur kann beispielsweise auf der Basis von folgenden Signalen erfolgen:
- einer Umfeldsensorik
- Fahrzeug-Daten des eigenen Fahrzeugs (z.B. Lenkwinkel, Lenkgeschwindigkeit, ESP-Sensorik, ...)
- Fahrerbeobachtung (z.B. über Innenraumkamera (Blickrichtung des Fahrers))
- Betätigung des Blinkers
- Weitere Signale

### Schritt 2: Beleuchtung des Objektes

Die Aktivierung des Systems zur Beleuchtung von ausgewählten Objekten kann bei erkannter Dunkelheit oder bei eingeschalteten Fahrscheinwerfern erfolgen. Dabei kann eine Erkennung von Dunkelheit z.B. mittels Helligkeitssensoren, Videosensorik, C2X-Communication oder ähnliches erkannt werden. Auf Basis des in Schritt 1 erkannten ungewollten Fahrspurverlassens werden z.B. folgende Aktionsmuster aktiviert:
1. Erhöhen der Helligkeit der Scheinwerfer auf der Seite des erhöhten Risikos
2. Anstrahlen/Hervorheben der Fahrspurmarkierung in Fahrtrichtung des Spurverlassens
3. Anstrahlen/Hervorheben möglicher in Fahrtrichtung des Spurverlassens sich befindlicher Objekte mit einer Kollisionsgefahr (z.B. Erkannt durch Radar, Video, weitere).

Ein Anstrahlen / Hervorheben der Objekte kann durch variierende Pulsationsmuster der Beleuchtung mit unterschiedlicher Frequenzmodulation verstärkt werden. Ein wichtiger Aspekt ist es, die Aufmerksamkeitslenkung des Fahrers direkt auf die Gefahr verursachenden Objekte, Markierungen (Fahrspurmarkierungen, Randobjekte, Bäume, Fußgänger, ...) zu lenken. Dabei erfolgt schon eine Aufmerksamkeitserhöhung durch fahrzeugautonome Veränderung des Scheinwerferkegels.

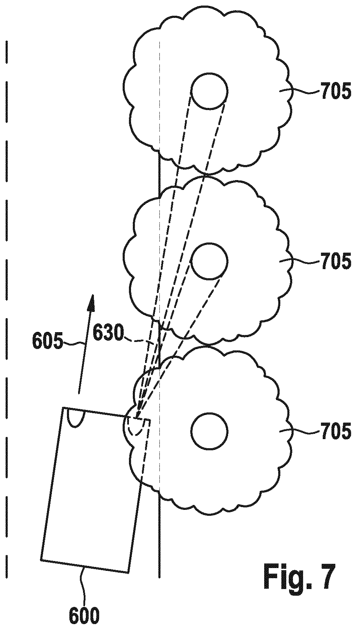

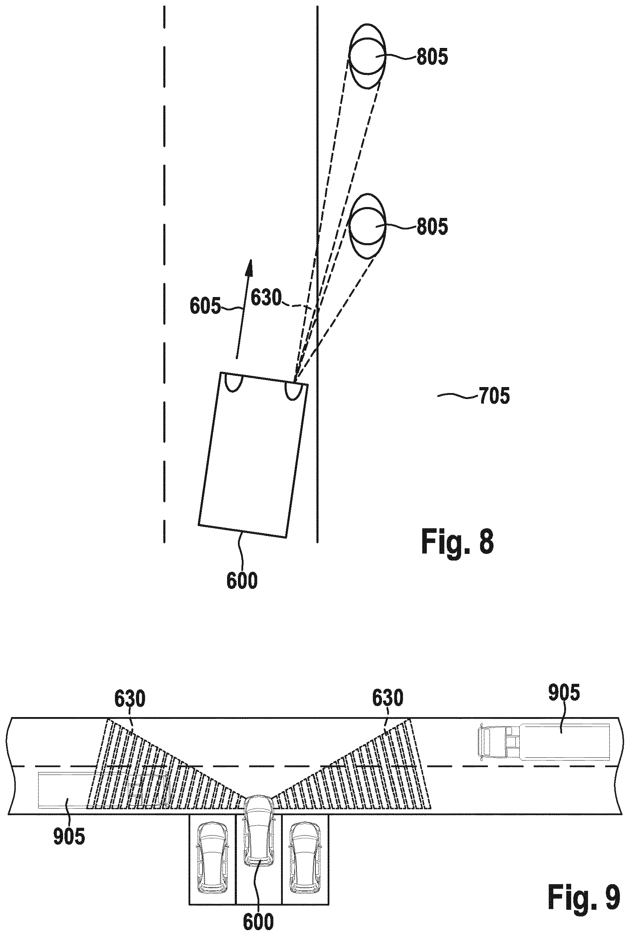

Beispielsweise kann dabei eine Beleuchtung von nicht mobilen Objekten wie Bäumen entsprechend der Darstellung aus der Fig. 7 erfolgen. Die Bäume 705 sind dabei am Fahrbahnrand angeordnet und werden von einem sich verändernden Lichtmuster aus dem Lichtkegel 630 durch zumindest einen Scheinwerfer des Fahrzeugs 600 angeleuchtet. Analog kann auch eine Beleuchtung von mobilen Objekten wie beispielsweise Fußgängern 805 erfolgen, wie dies in der schematischen Abbildung aus Fig. 8 wiedergegeben ist.

Der vorstehende Ansatz kann auch zur Implementierung eines zusätzlichen Verfahrens zur Warnung anderer Verkehrsteilnehmer beim Ausparken aus Parklücken bzw. beim Einfahren in eine kreuzende Verkehrssituation verwendet werden. Die Motivation zur Realisierung eines derartigen Verfahrens kann darin gesehen werden, dass beim Ausparken aus Parklücken dem Fahrer oft die Übersicht zur Verkehrssituation fehlt, in welche er einfährt. Unfälle durch kreuzenden Verkehr sind oft die Folge. Zum Teil auch schwere Unfälle abhängig von der Geschwindigkeit des kreuzenden Verkehrs. Generell sind Unfälle mit kreuzendem Verkehr hoch gefährlich und weisen hohe Todesraten aus.

Heutige Fahrzeugstrassen-Beleuchtungssysteme (d.h. insbesondere Scheinwerfer) sind in der Lage, das ausgesandte Licht in variablen Richtungen, auch lateral auszustrahlen. Weiterhin ist es auf Basis einer Umfeldsensorik und Fahrzeugsensorik sowie GPS in Kombination mit einer digitalen Karte oder auch C2X-Kommunikation es möglich zu erkennen, das sich ein Fahrzeug in einem Ausparkvorgang befindet bzw. in eine kreuzende Verkehrssituation einfährt.

Der vorstehend vorgestellte Ansatz kann dabei insbesondere verwendet werden, um sicherzustellen, dass beim Ausfahren aus einer Parklücke in eine kreuzende Verkehrssituation die sonst in Fahrtrichtung strahlenden die Leuchtkegel der Scheinwerfer beispielsweise
A) selbsttätig eingeschaltet und/oder
B) lateral - nach rechts und links außen positioniert oder gerichtet und/oder
C) selbsttätige zurückgeführt werden, z.B. nach Erreichen einer Mindestgeschwindigkeit und/oder einer anderen Sensorinformation. Diese Sensorinformation kann beispielsweise fahrzeugintern erfolgen und beispielsweise das Lenkverhalten über einen Lenkwinkelsensor erfassen und/oder fahrzeugextern erfolgen, beispielsweise unter Verwendung einer Videosensorik, eines GPS-Systems in Kombination mit einer digitalen Karte oder auf der Basis eines Ultraschall-Sensorsystems erfolgen. Dabei kann ein sich veränderndes Beleuchtungsmister durch die Scheinwerfer des eigenen Fahrzeugs ausgegeben werden. Auf diese Weise kann die Aufmerksamkeit der Fahrer des kreuzenden Verkehrs zum ausparkenden /einfahrenden Fahrzeugs gelenkt werden bzw. so dass insbesondere kreuzende Verkehrsteilnehmer gewarnt werden. Dabei ist es besonders vorteilhaft, wenn hierbei eine eigene spezielle (Auspark-) Lichtmusterfolge, z.B. eine Aussendung von Licht von oben nach unten ausgestrahlt wird, um kreuzende Verkehrsteilnehmer nicht zu blenden, und trotzdem durch die Lichtbewegung zu informieren/ alarmieren. Ein solches Beleuchtungsmuster kann beispielsweise entsprechend der Darstellung aus Fig. 9 ausgesandt werden. Hierbei wird durch das vom eigenen ausparkenden Fahrzeug 600 ausgesandte (insbesondere sich verändernde) Beleuchtungsmuster im Lichtkegel 630 ein querender Verkehr, insbesondere Fahrer von querenden Fahrzeugen 905 gewarnt.

Dabei kann der Lichtkegel ähnlich einer beruhigenden Handbewegung (beschwichtigend wie beispielsweise wenn flache Hände drückend und langsam nach unten gesenkt werden und/oder schnell aufsteigend bewegt werden - wie bei Beruhigung von Menschenmengen) geführt werden. Nach einem Erkennen der Ausfahrtsituation des aus der Parklücke ausfahrenden Fahrzeugs 600 wird die Lichtausstrahlung durch den oder die Scheinwerfer wieder in Fahrtrichtung des eigenen Fahrzeugs 600 positioniert.

Insbesondere ist bei diesem Verfahren also eine Situation eines Einfahrens in kreuzenden Verkehr zu berücksichtigen. Es erfolgt zunächst im eigenen Fahrzeug 600 eine Erkennung des Ausfahrens aus einer Parklücke. Die Erkennung des Ausfahrens in eine kreuzende Verkehrssituation aus einer Parklücke kann beispielsweise durch Ultraschall und oder z.B. durch Signale einer Videosensorik dargestellt werden. Laterale Ultraschallsensoren (USS = Ultraschallsensoren) erkennen den Wechsel von lateralen Objekten zu freier Sicht. Eine in Frontrichtung installierte Videosensorik erkennt z.B. die kreuzende Fahrbahnsituation, gegebenenfalls kreuzende Fahrzeuge (welche die Wahrscheinlichkeit der Situationserkennung erhöhen). Zusätzlich kann beim Einfahren in die Parklücke die Situation ebenfalls von einem Ultraschallsensor oder einer Videosensorik erkannt und abgespeichert werden (z.B. im EEPROM eines Steuergerätes). Auf Basis weiterer Sensoren wie einem GPS-System in Kombination mit einer digitalen Karte, Signalen einer Rückfahrtkamera usw. kann eine Sensor-Datenfusion dargestellt werden, die es erlaubt, die Situation des Ausparkens in eine kreuzende Verkehrssituation mit hoher Wahrscheinlichkeit zu erkennen. Zusätzlich kann auch eine Kommunikation Fahrzeug-zu-Fahrzeug oder Infrastruktur-zu Fahrzeug (auch als C2XC bezeichnet) zur Erhöhung der Wahrscheinlichkeit genutzt werden. Hierbei können auch Informationen übermittelt werden. Der geschwenkte Lichtkegel des Fahrzeugs kann ferner neben der über C2XC übermittelten Information des "Einfahrens eines Fahrzeuges in den kreuzenden Verkehr" eine sehr schöne visuelle Ergänzung geben. Zusätzlich können auch seitliche Lichtanlagen (Blinker) zur Information genutzt werden, z. B. durch hochfrequentes Pulsen). Die Situationserkennung und generelle Applikation der Funktion kann von weiteren Fahrzeugdaten wie z.B. der gemessenen Fahrzeuggeschwindigkeit abhängig gemacht werden.

Eine weitere Möglichkeit kann eine Erkennung einer Situation eines Einfahrens in einen kreuzenden Verkehr darstellen, beispielsweise an einer Straßenkreuzung. Hierbei erfolgt zunächst eine Erkennung des Einfahrens des Fahrzeugs in eine Kreuzung (z.B. ein Anfahren). Diese Erkennungsfunktion, die beim Ausfahren aus einer Parklücke verwendet wird, kann somit z.B. auch beim Anfahren an Kreuzungen genutzt werden. Eine Adaption der Situationserkennung könnte z.B. durch Erkennung von Verkehrszeichen, Signaleinrichtungen (z.B. Ampeln) und natürlich auch wieder auf Basis von Daten eines GPS-System in Verbindung mit einer digitalen Karte oder einer C2XC erreicht werden.

Das zuletzt vorgestellte Verfahren betrifft somit insbesondere eine Erkennung der Situation "Einfahren in kreuzenden Verkehr" und ein nachfolgendes Verlassen dieser Situation. Ferner erfolgt eine Information und/oder Warnung kreuzender Verkehrsteilnehmer auf Basis von auf den lateralen Verkehr ausgerichteten Lichtmusterfolgen durch ein Fahrzeugstraßen-Beleuchtungssystem des eigenen Fahrzeugs.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (300) zum Ändern einer Lichtaussendung zumindest eines Scheinwerfers (180) eines Fahrzeugs (100, 600), wobei das Verfahren (300) die folgenden Schritte aufweist:
- Einlesen (310) eines Positionssignals (160), das eine Höhe eines nicht-mobilen Objektes (410) vor oder neben dem Fahrzeug (100, 600) und über einer Fahrbahn repräsentiert; und
- Verändern (320) der Lichtaussendung von dem zumindest einen Scheinwerfer (180) des Fahrzeugs (100, 600) auf das Objekt (410) oder in ein Umfeld des Objekts unter Verwendung des Positionssignals (160), wobei beim Verändern (320) ein sich veränderndes Beleuchtungsmuster (190) auf das Objekt (410) oder in ein Umfeld des Objektes ausgestrahlt wird, um die Lichtaussendung des zumindest einen Scheinwerfers (180) des Fahrzeugs (100, 600) zu ändern
wobei im Schritt des Einlesens (310) ferner Fahrspurdaten eingelesen werden, die eine Information über eine Beziehung der Position des Objektes (410) zur Fahrspur repräsentiert, auf der sich das Fahrzeug (100, 600) befindet, wobei im Schritt des Veränderns (320) die Lichtausstrahlung unter Verwendung der eingelesenen Fahrspurdaten erfolgt.

2. Verfahren (300) gemäß Anspruch 1, **dadurch gekennzeichnet, dass** im Schritt des Veränderns (320) ein Beleuchtungsmuster (190) auf das Objekt (410) oder in das Umfeld des Objektes ausgestrahlt wird, das einen Teilbereich (210) mit einer hohen und einen anderen Teilbereich (220) mit einer niedrigen Helligkeit aufweist, wobei sich der Teilbereich (210) mit der hohen Helligkeit in Richtung des Objektes zu bewegt.

3. Verfahren (300) gemäß einem der vorangegangenen Ansprüche, **dadurch gekennzeichnet, dass** im Schritt des Veränderns (320) das Beleuchtungsmuster (190) derart ausgestrahlt wird, dass es zumindest einen Bereich (210, 220) aufweist, der kreisförmig oder umlaufend um das Objekt ausgebildet ist.

4. Verfahren (300) gemäß einem der vorangegangenen Ansprüche, **dadurch gekennzeichnet, dass** im Schritt des Veränderns (320) das Beleuchtungsmuster (190) derart ausgestrahlt wird, dass es einen geraden streifenförmigen Bereich (230) aufweist, insbesondere der sich bei dem Verändern (320) der Lichtaussendung über das Objekt bewegend ausgestrahlt wird.

5. Verfahren (300) gemäß einem der vorangegangenen Ansprüche, **dadurch gekennzeichnet, dass** das im Schritt des Einlesens (310) des Positionssignals (160) ferner eine Information über einen Typ oder eine Klasse des Objektes umfasst, wobei im Schritt des Veränderns (320) ansprechend auf die Information über den Typ oder die Klasse des Objektes ferner eines von zumindest zwei sich unterscheidenden Beleuchtungsmustern (190) ausgewählt wird, das auf das Objekt oder in das Umfeld des Objektes ausgestrahlt wird.

6. Verfahren (300) gemäß einem der vorangegangenen Ansprüche, **dadurch gekennzeichnet, dass** im Schritt des Einlesens (310) ferner ein Fahrtsignal über einen Fahrzeugparameter oder eine physikalische Größe eingelesen wird, die eine Bewegung des Fahrzeugs (100, 600) repräsentiert, wobei im Schritt des Veränderns (320) die Lichtaussendung ferner unter Verwendung des Fahrtsignals erfolgt.

7. Verfahren (300) gemäß einem der vorangegangenen Ansprüche, **dadurch gekennzeichnet, dass** im Schritt des Veränderns (320) eine Geschwindigkeit einer Veränderung des auf oder neben das Objekt ausgestrahlten Beleuchtungsmusters (190) in Abhängigkeit von einem eingelesenen Typ oder einer Klasse des Objektes und/oder einer Position des Objektes vor oder neben dem Fahrzeug (100, 600) erfolgt.

8. Verfahren (300) gemäß einem der vorangegangenen Ansprüche, **dadurch gekennzeichnet, dass** im Schritt des Einlesens (310) eine Information über eine vorhandene Parklücke (610) an einem Rand einer vom Fahrzeug (100, 600) befahrenen Fahrbahn eingelesen wird, wobei im Schritt des Veränderns (320) ferner die Lichtaussendung derart verändert wird, dass zumindest ein Teil des Beleuchtungsmusters (190) die Parklücke (610) beleuchtet oder in die Parklücke (610) gerichtet wird.

9. Verfahren (300) gemäß einem der vorangegangenen Ansprüche, **dadurch gekennzeichnet, dass** im Schritt des Einlesens (310) ein Helligkeitssignal eingelesen wird, das eine Helligkeit in der Umgebung des Fahrzeugs (100, 600) repräsentiert, wobei im Schritt des Veränderns (320) die Lichtaussendung ansprechend auf das Helligkeitssignal verändert wird, insbesondere dass im Schritt des Veränderns (320) die Lichtaussendung verändert wird, wenn das Helligkeitssignal eine Helligkeit signalisiert, die eine vordefinierte Schwelle unterschreitet.

10. Verfahren (300) gemäß einem der vorangegangenen Ansprüche, **dadurch gekennzeichnet, dass** im Schritt des Einlesens (310) eine Information eingelesen wird, dass das Fahrzeug (100, 600) aktuell aus einer Parklücke (610) ausfährt, wobei im Schritt des Veränderns (320) das Beleuchtungsmuster (190) derart ausgestrahlt wird, dass zumindest ein Teilbereich des Beleuchtungsmusters (190) auf ein querab zum Scheinwerfer (180) befindliches Objekt, insbesondere ein anderes Fahrzeug (905), ausgestrahlt wird.

11. Vorrichtung (170) zum Ändern einer Lichtaussendung zumindest eines Scheinwerfers (180) eines Fahrzeugs (100, 600), wobei die Vorrichtung (170) die folgenden Merkmale aufweist:
- eine Schnittstelle zum Einlesen eines Positionssignals (160), eine Höhe eines nicht-mobilen Objektes (410) über einer Fahrbahn repräsentiert; und
- eine Einrichtung zum Verändern der Lichtaussendung von dem zumindest einen Scheinwerfer (180) des Fahrzeugs (100, 600) auf das (410) unter Verwendung des Positionssignals (160), wobei beim Verändern ein sich veränderndes Beleuchtungsmuster (190) auf das Objekt (410) oder in ein Umfeld des Objektes ausgestrahlt wird, um die Lichtaussendung des zumindest einen Scheinwerfers (180) des Fahrzeugs (100, 600) zu ändern
**dadurch gekennzeichnet, dass**
die Schnittstelle zum Einlesen ferner ausgebildet ist, um Fahrspurdaten einzulesen, die eine Information über eine Beziehung der Position des Objektes (410) zur Fahrspur repräsentiert, auf der sich das Fahrzeug (100, 600) befindet, wobei die Einrichtung zum Verändern ausgebildet ist, um die Lichtausstrahlung unter Verwendung der eingelesenen Fahrspurdaten vorzunehmen.

12. Computer-Programmprodukt mit Programmcode zur Durchführung des Verfahrens (300) nach einem der Ansprüche 1 bis 10, wenn das Programm auf einer Vorrichtung oder einem Steuergerät (170) ausgeführt wird.

## Claims

1. Method (300) for changing a light output of at least one headlamp (180) of a vehicle (100, 600), wherein the method (300) has the following steps:
- reading in (310) a position signal (160) which represents a height of an immobile object (410) in front of or next to the vehicle (100, 600) and above a roadway; and
- changing (320) the light output of the at least one headlamp (180) of the vehicle (100, 600) onto the object (410) or into an area surrounding the object using the position signal (160), wherein when change (320) occurs, a changing lighting pattern (190) is irradiated onto the object (410) or into an area surrounding the object, in order to change the light output of the at least one headlamp (180) of the vehicle (100, 600), wherein in the reading-in step (310) lane data which represents information about a relationship of the position of the object (410) to the lane on which the vehicle (100, 600) is located are read in, wherein in the changing step (320) the radiation of light is carried out using the read-in lane data.

2. Method (300) according to Claim 1, **characterized in that** in the changing step (320) a lighting pattern (190) is irradiated onto the object (410) or into the area surrounding the object, which has a partial region (210) with a high level of brightness and another partial region (220) with a low level of brightness, wherein the partial region (210) with the high level of brightness moves in the direction of the object.

3. Method (300) according to one of the preceding claims, **characterized in that** in the changing step (320) the lighting pattern (190) is irradiated in such a way that it has at least one region (210, 220) which is embodied in a circular shape or so as to run around the object.

4. Method (300) according to one of the preceding claims, **characterized in that** in the changing step (320) the lighting pattern (190) is irradiated in such a way that it has a linear, strip-shaped region (230), in particular which is irradiated in a moving manner when the output of light via the object changes (320).

5. Method (300) according to one of the preceding claims, **characterized in that** in the reading-in step (310) of the position signal (160) in addition information about a type or a class of the object is included, wherein in the changing step (320) in addition one of at least two differing lighting patterns (190) is selected in response to the information about the type or the class of the object, which lighting pattern (190) is irradiated onto the object or into the surroundings of the object.

6. Method (300) according to one of the preceding claims, **characterized in that** in the reading-in step (310) in addition a travel signal relating to a vehicle parameter or a physical variable which represents a movement of the vehicle (100, 600) is read in, wherein in the changing step (320) the light output is also carried out using the travel signal.

7. Method (300) according to one of the preceding claims, **characterized in that** in the changing step (320) a speed of a change of the lighting pattern (190) which is irradiated onto or next to the object is implemented as a function of a read-in type or a class of the object and/or a position of the object in front of or next to the vehicle (100, 600).

8. Method (300) according to one of the preceding claims, **characterized in that** in the reading-in step (310) information about a parking space (610) which is present at an edge of a roadway which is being travelled on by the vehicle (100, 600) is read in, wherein in the changing step (320) the light output is additionally changed in such a way that at least part of the lighting pattern (190) illuminates the parking space (610) or is directed into the parking space (610).

9. Method (300) according to one of the preceding claims, **characterized in that** in the reading-in step (310) a brightness signal which represents a brightness level in the surroundings of the vehicle (100, 600) is read in, wherein in the changing step (320) the light output is changed in response to the brightness signal, in particular **in that** in the changing step (320) the light output is changed if the brightness signal signals a brightness level which undershoots a predefined threshold.

10. Method (300) according to one of the preceding claims, **characterized in that** in the reading-in step (310) information is read in to the effect that the vehicle (100, 600) is currently driving out of a parking space (610), wherein in the changing step (320) the lighting pattern (190) is irradiated in such a way that at least a partial region of the light pattern (190) is irradiated onto an object, in particular another vehicle (905), which is located abeam of the headlamp (180).

11. Device (170) for changing a light output of at least one headlamp (180) of a vehicle (100, 600), wherein the device (170) has the following features:
- an interface for reading in a position signal (160) represents a height of an immobile object (410) above a roadway; and
- a device for changing the light output of the at least one headlamp (180) of the vehicle (100, 600) onto the (410) using the position signal (160), wherein when a change occurs, a changing lighting pattern (190) is irradiated onto the object (410) or into an area surrounding the object, in order to change the light output of the at least one headlamp (180) of the vehicle (100, 600),
**characterized in that**
the interface for reading in is also designed to read in lane data which represents information about a relationship of the position of the object (410) to the lane on which the vehicle (100, 600) is located, wherein the device is designed to change in order to perform the radiation of light using the read-in lane data.

12. Computer program product having program code for carrying out the method (300) according to one of Claims 1 to 10 when the program is executed on a device or a control unit (170).

## Revendications

1. Procédé (300) destiné à modifier une émission de lumière d'au moins un phare (180) d'un véhicule (100, 600), dans lequel le procédé (300) comprend les étapes suivantes consistant à :
- lire (310) un signal de position (160) représentant une hauteur d'un objet non mobile (410) à l'avant ou à proximité du véhicule (100, 600) et au-dessus d'une chaussée ; et
- modifier (320) l'émission de lumière d'au moins un phare (180) du véhicule (100, 600) vers l'objet (410) ou dans un environnement de l'objet en utilisant le signal de position (160), dans lequel, lors de la modification (320), un motif d'éclairement variable (190) est rayonné vers l'objet (410) ou dans un environnement de l'objet afin de modifier l'émission de lumière dudit au moins un phare (180) du véhicule (100, 600) ; et
dans lequel, lors de l'étape de lecture (310), des données de voie représentant des informations concernant une relation entre la position de l'objet (410) et la voie sur laquelle se trouve le véhicule (100, 600) sont en outre lues, dans lequel, lors de l'étape de modification (320), le rayonnement de lumière est effectué en utilisant les données de voie lues.

2. Procédé (300) selon la revendication 1, **caractérisé en ce que**, lors de l'étape de modification (320), un motif d'éclairement (190) comportant une zone partielle (210) de luminosité élevée et une autre zone partielle (220) de faible luminosité est rayonné vers l'objet (410) ou dans l'environnement de l'objet, dans lequel la zone partielle de luminosité élevée (210) se déplace vers l'objet.

3. Procédé (300) selon l'une des revendications précédentes, **caractérisé en ce que**, lors de l'étape de modification (320), le motif d'éclairement (190) est rayonné de manière à ce qu'il comporte au moins une zone (210, 220) formée de manière circulaire ou circonférentielle autour de l'objet.

4. Procédé (300) selon l'une des revendications précédentes, **caractérisé en ce que**, lors de l'étape de modification (320), le motif d'éclairement (190) est rayonné de manière à présenter une zone rectiligne en forme de bande (230), qui est en particulier rayonnée en mouvement vers l'objet lors de la modification (320) de l'émission de lumière.

5. Procédé (300) selon l'une des revendications précédentes, **caractérisé en ce qu'**il comprend en outre, lors de l'étape de lecture (310) du signal de position (160), une information concernant un type ou une classe de l'objet, dans lequel, lors de l'étape de modification (320), en réponse à l'information concernant le type ou la classe de l'objet, on sélectionne en outre l'une d'au moins deux configurations d'éclairement différentes (190) qui est rayonnée vers l'objet ou dans l'environnement de l'objet.

6. Procédé (300) selon l'une des revendications précédentes, **caractérisé en ce que**, lors de l'étape de lecture (310), un signal de conduite concernant un paramètre de véhicule ou une grandeur physique représentant un mouvement du véhicule (100, 600) est en outre lu, dans lequel, lors de l'étape de modification (320), l'émission de lumière est en outre effectuée en utilisant le signal de conduite.

7. Procédé (300) selon l'une des revendications précédentes, **caractérisé en ce que**, lors de l'étape de modification (320), une vitesse d'une modification du motif d'éclairement (190) rayonné vers ou à proximité de l'objet est effectuée en fonction d'un type lu ou d'une classe et/ou d'une position de l'objet à l'avant ou à proximité du véhicule (100, 600).

8. Procédé (300) selon l'une des revendications précédentes, **caractérisé en ce que**, lors de l'étape de lecture (310), une information concernant une place de stationnement (610) présente sur un bord de la chaussée parcourue par le véhicule (100, 600) est lue, dans lequel, lors de l'étape de modification (320), l'émission de lumière est en outre modifiée de telle manière qu'au moins une partie du motif d'éclairement (190) éclaire la place de stationnement (610) ou soit dirigée vers la place de stationnement (610).

9. Procédé (300) selon l'une des revendications précédentes, **caractérisé en ce que**, lors de l'étape de lecture (310), un signal de luminosité représentant une luminosité dans l'environnement du véhicule (100, 600) est lu, dans lequel, lors de l'étape de modification (320), l'émission de lumière est modifiée en réponse au signal de luminosité, en particulier **en ce que**, lors de l'étape de modification (320), l'émission de lumière est modifiée si le signal de luminosité signale une luminosité qui se situe en-dessous d'un seuil prédéfini.

10. Procédé (300) selon l'une des revendications précédentes, **caractérisé en ce que**, lors de l'étape de lecture (310), une information indiquant que le véhicule (100, 600) quitte actuellement une place de stationnement (610) est lue, dans lequel, lors de l'étape de modification (320), le motif d'éclairement (190) est rayonné de telle manière qu'au moins une zone partielle du motif d'éclairement (190) soit rayonnée vers un objet, en particulier un autre véhicule (905), situé transversalement au projecteur (180).

11. Dispositif (170) destiné à modifier une émission de lumière d'au moins un phare (180) d'un véhicule (100, 600), dans lequel le dispositif (170) présente les caractéristiques suivantes :
- une interface destinée à lire un signal de position (160), représente une hauteur d'un objet non mobile (410) au-dessus d'une chaussée ; et
- un moyen destiné à modifier l'émission de lumière dudit au moins un phare (180) du véhicule (100, 600) vers le (410) en utilisant le signal de position (160), dans lequel, lors de la modification, un motif d'éclairement variable (190) est rayonné vers l'objet (410) ou dans un environnement de l'objet afin de modifier l'émission de lumière dudit au moins un phare (180) du véhicule (100, 600),
**caractérisé en ce que**
l'interface de lecture est en outre conçue pour lire des données de voie représentant des informations concernant une relation entre la position de l'objet (410) et la voie sur laquelle se trouve le véhicule (100, 600), dans lequel le moyen est conçu pour modifier le rayonnement de lumière en utilisant les données de voie lues.

12. Produit de programme d'ordinateur comportant un code de programme destiné à mettre en oeuvre le procédé (300) selon l'une des revendications 1 à 10 lorsque le programme est exécuté sur un dispositif ou un appareil de commande (170).
